# EUROPÄISCHE PATENTSCHRIFT

(11) **EP 4 229 312 B1**
(45) Veröffentlichungstag und Bekanntmachung des Hinweises auf die Patenterteilung: **21.05.2025**
(21) Anmeldenummer: 21799192.6
(22) Anmeldetag: 12.10.2021
(51) Int. Cl.: F16D 57/00

(54) **MAGNETORHEOLOGISCHE BREMSEINRICHTUNG**
MAGNETORHEOLOGICAL BRAKING DEVICE
DISPOSITIF DE FREINAGE MAGNÉTORHÉOLOGIQUE

(30) Priorität: 13.10.2020 DE 102020126912
(43) Veröffentlichungstag der Anmeldung: 23.08.2023
(73) Patentinhaber: INVENTUS Engineering GmbH, 6771 St. Anton i.M. (AT)
(72) Erfinder: BATTLOGG, Stefan, 6771 St. Anton i.M. (AT)
(74) Vertreter: BSB Patentanwälte Schütte & Engelen Partnerschaft mbB
(86) Internationale Anmeldenummer: PCT/EP2021/078154
(87) Internationale Veröffentlichungsnummer: WO 2022/079013

(56) Entgegenhaltungen:
- DE-A1- 102012 017 423
- DE-A1- 102018 100 390
- DE-A1- 102020 127 055
- DE-B3- 102020 106 328

## Beschreibung

Die Erfindung betrifft eine magnetorheologische Bremseinrichtung mit einem feststehenden Halter und mit wenigstens zwei Bremskomponenten und/oder Dämpferkomponenten. Die erfindungsgemäße magnetorheologische Bremseinrichtung kann auf vielfältigen technischen Gebieten zum Abbremsen von Relativbewegungen zueinander eingesetzt werden. Die erfindungsgemäße magnetorheologische Bremseinrichtung kann auch als haptische Bedieneinrichtung eingesetzt werden und zum Beispiel bei der Bedienung von technischen Einrichtungen in Fahrzeugen, z. B. als Drehsteller; Dreh-/Drücksteller; für das Infotainment, die Klimaanlage (Temperatur, Lüftungsstufe, Verteilung ...), als Getriebewahlschalter, zur Navigation, bei dem Tempomat, bei der Abstandsregelung, als Sitzverstellung, in der Lenkung oder im Lenkrad, bei der Fahrwerksverstellung, bei der Fahrmodiverstellung, zur Scheibenwischereinstellung, zur Fenster- oder Schiebedachversteller, beim Parkassistent oder zum Einstellen des (teil-) autonomen Fahrens oder als Lenkradersatz. Der Einsatz bei Kraftfahrzeugen, Luftfahrt- und Flugzeugen, Schiffen, Booten, Landtechnik (Traktoren, Mähdrescher, Erntemaschinen, sonstigen Feldmaschinen für die Landwirtschaft), Baumaschinen und Maschinen für das Material Handling (Gabelstapler...) oder bei medizinischen oder industriellen Anlagen ist möglich. Die Erfindung kann auch bei der Bedienung oder als Eingabegerät von/für Waschmaschinen, Küchen-/Haushaltsgeräten und -einrichtungen, Radios, Fotoapparaten und Filmkameras, Hi-Fi- und Fernsehanlagen, Smart Devices, Smart-Home-Geräten, Laptops, PCs, Smartwatches, in einem Kronenrad von Armbanduhren oder als Computermaus oder als Drehrad in einer Computermaus oder Controllern, Spielkonsolen, Gamingequipment, Drehknopf in einer Tastatur oder anderen Geräten verwendet werden.

Magnetorheologische Fluide weisen beispielsweise in einem Öl verteilt feinste ferromagnetische Partikel wie beispielsweise Carbonyleisenpulver auf. In magnetorheologischen Flüssigkeiten werden annähernd runde oder kugelförmige Partikel mit einem herstellungsbedingten Durchmesser von 1 bis 10 um verwendet, wobei die Partikelgröße und Form nicht einheitlich ist. Wird ein solches magnetorheologisches Fluid mit einem Magnetfeld beaufschlagt, so verketten sich die Carbonyleisenpartikel des magnetorheologischen Fluids entlang der Magnetfeldlinien, sodass die rheologischen Eigenschaften des magnetorheologischen Fluides (MRF) abhängig von Form und Stärke des Magnetfeldes erheblich beeinflusst werden (übertragbare Schubspannungen).

Die DE 10 2018 100 390 A1 der Anmelderin offenbart einen Bedienknopf mit einer magnetorheologischen Bremseinrichtung, wobei in dem Bremsspalt Wälzkörper angeordnet sind. Die DE 10 2012 017 423 A1 offenbart eine Übertragungsvorrichtung mit zwei koppelbaren Komponenten, die sich zueinander translatorisch bewegen und zwischen denen ein Scherspalt ausgebildet ist.

Die nach dem Prioritätstag veröffentlichten DE 10 2020 106 328 B3 und DE 10 2020 127 055 A1 zeigen Drehdämpfer mit einer Sternkontur in dem mit einem MRF gefüllten Spalt, sodass sich im Bereich der Sternkontur ein umlaufender Spalt mit veränderlicher Spalthöhe ergibt.

Mit der WO 2012/034697 A1 ist eine magnetorheologische Übertragungsvorrichtung bekannt geworden, die zwei koppelbare Komponenten aufweist, deren Kopplungsintensität beeinflussbar ist. Zur Beeinflussung der Kopplungsintensität ist ein Kanal mit einem magnetorheologischen Medium vorgesehen. Über ein Magnetfeld wird das magnetorheologische Medium in dem Kanal beeinflusst. In dem Kanal sind Drehkörper vorgesehen, an denen spitzwinklige und das magnetorheologische Medium enthaltende Bereiche vorgesehen sind. Der Kanal oder wenigstens ein Teil davon ist mit dem Magnetfeld einer Magnetfelderzeugungseinrichtung beaufschlagbar, um die Partikel wahlweise (magnetisch) zu verketten und mit dem Drehkörper zu verkeilen oder freizugeben. Diese magnetorheologische Übertragungsvorrichtung kann auch an einem Drehknopf zur Bedienung von technischen Geräten eingesetzt werden. Eine solche magnetorheologische Übertragungsvorrichtung funktioniert und erlaubt die Übertragung von recht hohen Kräften oder Drehmomenten bei gleichzeitig relativ kleiner Bauform bzw. Bauvolumen.

In der WO 2012/034697 A1 ist auch ein Drehknopf oder Bedienknopf offenbart, bei dem der eigentliche Knopf um eine Welle drehbar angebracht ist. Über das von einer elektrischen Spule erzeugte Magnetfeld kann das Bremsmoment gesteuert werden. Wird ein höheres erzeugbares Bremsmoment gewünscht, so können statt kugelförmiger Drehkörper auch zylindrische Walzen eingesetzt werden, sodass das Magnetfeld auf einer längeren Strecke bzw. größeren Fläche wirkt (es findet eine Magnetfeldkonzentration und Keilbildung über eine größere Fläche statt). Es hat sich insbesondere bei Dreh- oder Bedienknöpfen mit relativ kleinem Durchmesser gezeigt, dass eine Verlängerung der Wälzkörper nicht unbedingt zu einer Erhöhung des maximal erzeugbaren Bremsmomentes führt. Es hat sich herausgestellt, dass dies daran liegt, dass das Magnetfeld durch die zentrale Welle geschlossen wird bzw. hindurch gehen muss. Der kleine Durchmesser der Welle begrenzt das erzeugbare Bremsmoment, da das für die Bremsung erforderliche Magnetfeld im (Wellen)material schnell gesättigt ist. Das vom Magnetfeld durchflossene Material lässt keinen höheren Magnetfluss mehr zu, weshalb auch kein stärkeres Magnetfeld zu den Walzen gelangen kann. Der kleinste vom Magnetfeld durchflossene Querschnitt im Gesamtmagnetkreis definiert den maximal möglichen Magnetfluss und damit das maximale Bremsmoment in der Bremsvorrichtung. Der Einsatz von längeren Walzen als Drehkörpern kann sich dann sogar nachteilig auf das erzeugbare Bremsmoment auswirken, da sich das Magnetfeld über die längere Walzenfläche verteilt. Es liegt eine geringere Feldstärke an (geringe Magnetfeldkonzentration). Weil die erzielbare Bremswirkung nicht linear von dem Magnetfeld abhängt, sondern bei stärkeren Magnetfeldern überproportional steigt, sinkt die erzielbare Bremswirkung dementsprechend bei schwächeren Magnetfeldern überproportional.

Es ist deshalb die Aufgabe der vorliegenden Erfindung, eine magnetorheologische Bremseinrichtung zur Verfügung zu stellen, welche insbesondere auch bei kleinen oder sogar bei sehr kleinen Durchmessern ein hohes Bremsmoment (Drehmoment) bzw. ein höheres Bremsmoment (Drehmoment) erlaubt als es im Stand der Technik der Fall ist.

Diese Aufgabe wird gelöst durch eine magnetorheologische Bremseinrichtung mit den Merkmalen des Anspruchs 1. Bevorzugte Weiterbildungen der Erfindung sind Gegenstand der Unteransprüche. Weitere Vorteile und Merkmale der magnetorheologischen Bremseinrichtung ergeben sich aus der allgemeinen Beschreibung und der Beschreibung der Ausführungsbeispiele.

Eine erfindungsgemäße magnetorheologische Bremseinrichtung weist einen feststehenden Halter und ein Bremsgehäuse und wenigstens zwei Bremskomponenten auf. Eine der beiden Bremskomponente ist mit dem Halter drehfest verbunden und die beiden Bremskomponenten sind relativ zueinander kontinuierlich drehbar. Eine erste Bremskomponente erstreckt sich in einer axialen Richtung und umfasst einen sich in der axialen Richtung erstreckenden Kern aus einem magnetisch leitfähigen Material. Die zweite Bremskomponente umfasst ein sich um die erste Bremskomponente herum drehbares und hohl ausgebildetes Mantelteil. Zwischen der ersten und der zweiten Bremskomponente ist ein umlaufender und wenigstens zum Teil und insbesondere vollständig mit einem magnetorheologischen Medium gefüllter Spalt ausgebildet. Dabei benetzt das magnetorheologische Medium die Bremskomponenten. In dem Bremsgehäuse ist (wenigstens) eine elektrische Spule aufgenommen. Zwischen dem Mantelteil und dem Kern ist wenigstens eine Sternkontur mit daran ausgebildeten Magnetfeldkonzentratoren angeordnet bzw. aufgenommen, welche (insbesondere radial und/oder auch axial) in den Spalt hineinragen, sodass sich im Bereich der Sternkontur ein umlaufender Spaltbereich mit (über dem Umfangswinkel) veränderlicher Spalthöhe ergibt. Die Sternkontur umfasst wenigstens ein Stapelpaket von (schmalen) Sternblechen. Eine Breite eines Sternblechs ist insbesondere schmal im Vergleich zu einer Breite/Gesamtbreite des Stapelpakets.

Die erste Bremskomponente definiert eine axiale Richtung. Die erste Bremskomponente kann aber auch wenigstens örtlich zur axialen Richtung gewinkelt ausgebildet sein. Unter der Formulierung, dass sich der Kern der ersten Bremskomponente in der axialen Richtung erstreckt, wird im Sinne der vorliegenden Erfindung verstanden, dass sich der Kern wenigstens auch im Wesentlichen in die axiale Richtung erstreckt. Der Kern kann einen Verlauf aufweisen, der einen leichten Winkel zur axialen Richtung aufweist. Beispielsweise kann der Kern auch unter einem Winkel von 2,5° oder 5° oder 10° oder 15° zur axialen Richtung ausgerichtet sein. Die Wicklung der elektrischen Spule kann radial um den Kern herum oder kann auch (ebenso nicht exakt) in axialer Richtung um den Kern ausgerichtet sein. Auch die elektrische Spule kann unter einem Winkel von 5° oder 10° oder 15° oder dergleichen zur axialen oder radialen Richtung sein. Bei einer axialen Wicklung der elektrischen Spule um den Kern ist es bevorzugt, dass ein Winkel zwischen der Ausrichtung des Kerns und der axialen Richtung und ein Winkel der Wicklung der elektrischen Spule zur axialen Richtung kleiner 20° und insbesondere kleiner 10° beträgt.

Die erfindungsgemäße magnetorheologische Bremseinrichtung hat viele Vorteile. Ein erheblicher Vorteil der erfindungsgemäßen magnetorheologischen Bremseinrichtung besteht darin, dass durch die Sternkontur oder sternähnliche Kontur mit den Magnetfeldkonzentratoren ein hohes Bremsmoment (hohe Schubspannungen) erzeugbar ist.

Ein besonderer Vorteil ergibt sich dadurch, dass die Magnetfeldkonzentratoren fest mit dem Kern bzw. dem Mantelteil verbunden sind und insbesondere einstückig damit verbunden sind. Dadurch wird ein besonders einfacher und kostengünstig herstellbarer Aufbau mit geringerem Montagaufwand ermöglicht. Es hat sich in überraschender Weise herausgestellt, dass die Magnetfeldkonzentratoren nicht als sich selbst drehende oder als drehbare Wälzkörper ausgebildet sein müssen, sondern, dass auch feststehende Magnetfeldkonzentratoren zuverlässig und reproduzierbar eine starke Erhöhung des erzeugbaren Bremsmomentes zur Verfügung stellen. Die Magnetfeldkonzentratoren können entweder separat gefertigt und mit der Sternkontur oder direkt mit dem Kern oder dem Mantelteil fest verbunden und z. B. verschraubt, vernietet, verlötet, verschweißt oder gegebenenfalls auch verklebt oder verpresst werden. Erstaunlicher Weise ist es auch möglich, die Magnetfeldkonzentratoren an dem Mantelteil anzubringen. Insgesamt wird ein hohes Bremsmoment bei kleinem (und noch kleinerem) Bauraum erzeugt. Dadurch kann das Bremsmoment insgesamt vergrößert oder bei kleinerem Bauraum gleich gehalten werden. Es eröffnen sich auch neue Möglichkeiten, da mit einem erheblich kleineren Bauraum ein größeres Bremsmoment erzeugt werden kann als bisher.

Eine erfindungsgemäße magnetorheologische Bremseinrichtung ist für den Einsatz an unterschiedlichen Einrichtungen vorgesehen. Die magnetorheologische Bremseinrichtung kann in einer haptischen Bedieneinrichtung eingesetzt oder als eine solche ausgestaltet werden. Die magnetorheologische Bremseinrichtung kann auch in einer Gerätekomponente eingesetzt werden.

Unter einer Sternkontur im Sinne der vorliegenden Erfindung wird auch eine sternähnliche Kontur verstanden. Eine Sternkontur im Sinne der der vorliegenden Erfindung weist radial abstehende Konturelemente als Magnetfeldkonzentratoren auf. Insbesondere ist ein lokaler Radius an einem Konturelement größer als an einer Stelle in Umfangsrichtung benachbart dazu. Der maximale lokale Radius ist dort vorzugsweise um wenigstens 0,1 % und insbesondere wenigstens 0,25 % (und vorzugsweise mehr) größer als ein minimaler lokaler Radius in Umfangsrichtung benachbart dazu. Es sind vorzugsweise mehrere Konturelemente über dem Umfang ausgebildet.

Der Kern besteht aus einem magnetisch (gut) leitfähigen Material. Der Kern kann insbesondere aus gesintertem Material (Metall) hergestellt werden. Der Kern kann so einfacher in gewünschter Form gefertigt werden. Die erste Bremskomponente umfasst vorzugsweise den Kern und insbesondere eine Achse oder einen Schaft, der insbesondere wenigstens zum Teil oder vollständig aus einem magnetisch nichtleitenden Material besteht. Vorzugsweise sind die Achse (der Schaft) und der Kern lösbar miteinander verbunden.

Die Sternkontur besteht wenigstens teilweise oder vollständig auch aus einem magnetisch (gut) leitfähigen Material.

Vorzugsweise ist die elektrische Spule um wenigstens einen Abschnitt des Kerns gewickelt, sodass ein Magnetfeld der elektrischen Spule durch den Kern und die Magnetfeldkonzentratoren und durch den (sich axial und/oder radial erstreckenden) Spalt in eine Wandung des Mantelteils hinein verläuft.

Vorzugsweise verläuft das Magnetfeld bzw. verlaufen die Magnetfeldlinien quer durch die erste bzw. innere Bremskomponente. Eine Verlängerung der ersten Bremskomponente erhöht dann bei gleichem Durchmesser den möglichen Magnetfluss und damit das Bremsmoment. Der meist konstruktiv nicht größer mögliche Kerndurchmesser beschränkt dann nicht den Magnetfluss.

Bei der magnetorheologischen Bremseinrichtung bilden die Magnetfeldkonzentratoren Übertragungskomponenten. Die Magnetfeldkonzentratoren bzw. die Übertragungskomponenten sind wenigstens zum Teil und insbesondere im Wesentlichen vollständig oder vollständig von einem magnetorheologischen Medium umgeben. Insgesamt wird vorzugsweise ein magnetorheologisches Fluid als magnetorheologisches Medium eingesetzt.

Vorzugsweise sind über dem Umfang des Spaltes mehrere Magnetfeldkonzentratoren (als Übertragungskomponenten) verteilt angeordnet. Die Magnetfeldkonzentratoren sind nicht um sich selbst herum drehbar, drehen sich aber mit der Bremskomponente, an der sie befestigt sind. Dadurch kommt es bei einer Drehung zu einer Relativbewegung im Spalt.

Es ist möglich, dass zusätzlich zu den Magnetfeldkonzentratoren oder statt einzelnen Segmenten der Sternkontur auch noch weitere Übertragungskomponenten umfasst sind, die z. B. als Wälzkörper ausgebildet sind. Unter dem Begriff "Wälzkörper" ist im Sinne der vorliegenden Erfindung ein Drehkörper zu verstehen, der geeignet ist, in dem Spalt auf der ersten bzw. zweiten Bremskomponente abzurollen.

In bevorzugten Ausgestaltungen und Weiterbildungen der erfindungsgemäßen magnetorheologischen Bremseinrichtung ist zwischen dem Mantelteil und dem Kern wenigstens eine Scheibenkontur ausgebildet ist, wobei zwischen der Scheibenkontur und dem Mantelteil ein Spaltabschnitt ausgebildet ist. Dabei ist eine Spalthöhe in dem Spaltabschnitt weniger veränderlich als die Spalthöhe in dem Spaltbereich der Sternkontur.

In einfachen und besonders bevorzugten Ausführungsformen weist der Spalt speziell ausgebildete Bremsbereiche auf. In den Bremsbereichen ist der Spalt lokal erheblich enger als an anderen Stellen. Ein wesentlicher Bremsbereich wird durch den Spaltbereich an der Sternkontur gebildet. Ein anderer (z. B. zweiter) Bremsbereich kann durch den Spaltabschnitt an der Scheibenkontur zur Verfügung gestellt werden.

Vorzugsweise ist eine minimale Spalthöhe an einem Spaltbereich an der Sternkontur kleiner als 0,25 mm oder 0,20 mm oder 0,15 mm und vorzugsweise kleiner als 0,1 mm und kann z. B. 0,05 mm +/-25% betragen. Vorzugsweise ist eine Spalthöhe an einem Spaltabschnitt an einer Scheibenkontur kleiner als 0,15 mm und vorzugsweise kleiner als 0,1 mm und kann z. B. 0,05 mm +/-25% betragen.

Vorzugsweise weist der Spaltabschnitt eine über den Umfang im Wesentlichen konstante (und geringe) Spalthöhe auf. Besonders bevorzugt weist die Scheibenkontur eine zylindrische Außenkontur aufweist. Die Spalthöhe kann z. B. an der zylindrischen Außenkontur zwischen 0,03 mm und 0,1 mm, vorzugsweise etwa 0,05 mm betragen. Dadurch wird auch eine Führung des Mantelteils durch die Scheibenkontur ermöglicht.

In bevorzugten Ausgestaltungen kann die Scheibenkontur an einer Axialseite eine nach außen abstehende Außenkontur aufweisen. Die Außenkontur kann konisch, kegelförmig, bauchig oder abgerundet ausgebildet sein. Insbesondere ist die nach außen abstehende Außenkontur rotationsymmetrisch ausgebildet. Die nach außen abstehende Außenkontur kann auch zapfenförmig ausgebildet sein. Durch die nach außen abstehende Außenkontur kann ein Reservoir für magnetorheologisches Medium oder Fluid zur Verfügung gestellt werden, welches in dem Bereich des Spaltabschnitt (weiterer Bremsbereich) beim Bremsen benötigt werden kann, um magnetische Partikel bereit zu stellen.

Vorzugsweise weist der Spaltabschnitt eine kleinere Spalthöhe auf als eine minimale Spalthöhe oder jedenfalls mittlere Spalthöhe des Spaltbereichs. Durch eine geringe Spalthöhe in dem Spaltabschnitt kann ein starkes Magnetfeld übertragen werden, da die magnetischen Verluste klein sind.

Vorzugsweise führt die Sternkontur das Mantelteil in dem Spaltbereich. Besonders bevorzugt führt die Scheibenkontur das Mantelteil in dem Spaltabschnitt und dient als Lagerstelle für das Mantelteil. Das erlaubt eine besonders kostengünstige Konstruktion. Durch die dort möglichen engen Toleranzen können auf geringem Bauraum eine magnetorheologische Bremseinrichtung und eine haptische Bedieneinrichtung mit einer magnetorheologischen Bremseinrichtung zur Verfügung gestellt werden, welche hohen und höchsten Qualitätsansprüchen genügt und einfach und kostengünstig herstellbar ist.

Vorzugsweise ist auf dem Kern ein Wälzkörperabschnitt ausgebildet, an dem Wälzkörper zwischen dem Kern und dem Mantelteil angeordnet sind. Vorzugsweise können sich die Wälzkörper vollständig um den Kern herum bewegen. Eine Außenoberfläche des Kerns ist in dem Wälzkörperabschnitt vorzugsweise zylindrisch ausgebildet. Der Wälzkörperabschnitt bildet dabei einen weiteren Bremsbereich. Die Wälzkörper bestehen dabei wenigstens zum Teil und wenigstens teilweise oder vollständig aus einem magnetisch leitenden Material. Insbesondere sind alle Wälzkörper aus einem magnetisch leitenden Material gefertigt.

Eine Hybridlösung mit einem Bremsbereich an einer Sternkontur in einem Spaltbereich und mit einem weiteren Bremsbereich an einem Wälzkörperabschnitt bietet viele Vorteile.

In dem Wälzkörperabschnitt sind rund um den Kern herum Wälzkörper auf dem Umfang des Kerns angeordnet, insbesondere wenn (benachbart) zu dem Wälzkörperabschnitt eine elektrische Spule um den Kern herum gewickelt ist. Auf einer axialen Seite der elektrische Spule ist dann vorzugsweise die Sternkontur angeordnet und auf der anderen Seite der Wälzkörperabschnitt mit den Wälzkörpern. Das magnetische Feld der elektrische Spule verläuft dann in dem Kern und in dem Mantelteil in axialer Richtung. In dem Spaltbereich treten die Feldlinien des Magnetfeldes dann etwa radial von dem Kern durch die Sternkontur in das Mantelteil hinein bzw. umgekehrt. Ebenso treten die Feldlinien des Magnetfeldes in dem Wälzkörperabschnitt etwa radial durch die Wälzkörper hindurch in das das Mantelteil hinein bzw. umgekehrt.

Der Wälzkörperabschnitt erlaubt die Erzeugung hoher Bremsmomente insbesondere bei kleinen Drehzahlen des Mantelteils. Der Bremsbereich mit der Sternkontur erlaubt ein hohes statisches Moment und höhere Momente bei höheren Drehzahlen.

Ein radialer Freiraum für einen Wälzkörper zwischen dem Mantelteil und dem Kern in dem Wälzkörperabschnitt ist vorzugsweise größer als eine minimale Spalthöhe in dem Spaltbereich an der Sternkontur.

Der radiale Freiraum für einen Wälzkörper in dem Wälzkörperabschnitt ist vorzugsweise mehr als doppelt oder wenigstens dreimal so groß oder größer als die minimale Spalthöhe in dem Spaltbereich der Sternkontur. Für eine effektive Keilwirkung ist in dem Wälzkörperabschnitt eine Spalthöhe sinnvoll, die größer ist als minimale Spalthöhe in dem Spaltbereich der Sternkontur.

Die Wälzkörper können über magnetisch nichtleitende Führungselemente geführt werden.

In allen Ausgestaltungen ist es bevorzugt, dass die Sternkontur wenigstens ein Stapelpaket von (schmalen) Sternblechen umfasst. Ein Sternblech kann z. B. zwischen 0,5 mm und 5 mm oder 10 mm dick ausgebildet sein. In vorteilhaften einfachen Ausgestaltungen weist das Sternblech eine Dicke zwischen etwa 1 mm und etwa 3 mm auf.

Vorzugsweise umfasst wenigstens ein Stapelpaket direkt aneinander anliegende Sternbleche.

Ebenso ist es möglich, dass eine Scheibenkontur eingesetzt wird. Eine Scheibenkontur wird insbesondere insgesamt durch ein Stapelpaket von (schmalen) Scheibenblechen gebildet. Eine Scheibenkontur ist insbesondere rund ausgebildet.

Ein Stapelpaket für die Sternkontur und/oder eine Scheibenkontur kann auch Sternbleche und Scheibenbleche umfassen. Diese können auch jeweils separate Teilpakete bilden oder z. B. abwechselnd oder gemischt angeordnet werden. Dabei können unter anderem Scheibenbleche, Rundbleche und andere Konturbleche eingesetzt werden.

Ein Stapelpaket kann insbesondere eine Mehrzahl von Stanzteilen umfassen oder aus Stanzteilen bestehen. Sternbleche und/oder Scheibenbleche und/oder andere Konturbleche sind insbesondere Stanzteile.

In einer bevorzugten Ausgestaltung umfasst die magnetorheologische Bremseinrichtung einem feststehenden Halter und wenigstens zwei Bremskomponenten, wobei eine der beiden Bremskomponenten mit dem Halter drehfest verbunden ist und wobei die beiden Bremskomponenten relativ zueinander kontinuierlich drehbar sind, wobei sich eine erste Bremskomponente in axialer Richtung erstreckt und wobei die zweite Bremskomponente ein sich um die erste Bremskomponente herum erstreckendes hohl und innen wenigstens abschnittsweise zylindrisch ausgebildetes Mantelteil umfasst, wobei zwischen der ersten und der zweiten Bremskomponente ein umlaufender und wenigstens zum Teil mit einem magnetorheologischen Medium gefüllter Spalt ausgebildet ist. Dabei umfasst die erste Bremskomponente wenigstens eine elektrische Spule und einen sich in der axialen Richtung erstreckenden Kern aus einem magnetisch leitfähigen Material, wobei der Kern einen Grundkörper und nach außen abstehende Kernkonturen (als Magnetfeldkonzentratoren) umfasst, sodass sich ein umlaufender Spalt mit (mit über dem Umfangswinkel) veränderlicher Spalthöhe ergibt, und wobei die elektrische Spule um wenigstens einen Abschnitt des Kerns gewickelt ist oder den Kern umgibt, sodass ein Magnetfeld der elektrischen Spule durch den Kern und durch wenigstens eine daran ausgebildete nach außen abstehende Kernkontur (als Magnetfeldkonzentrator) und durch den sich (axial oder radial) nach außen anschließenden Spaltbereich in eine Wandung des Mantelteils hinein verläuft.

In einer bevorzugten Weiterbildung der Erfindung weist wenigstens ein Konturelement einer Sternkontur (ein Magnetfeldkonzentrator) eine sich zum distalen Ende hin verjüngende Querschnittsfläche auf.

Vorzugsweise ist wenigstens ein Magnetfeldkonzentrator am distalen Ende abgerundet ausgebildet.

Es ist bevorzugt, dass der Kern eine Mehrzahl an Armen und/oder das Mantelteil eine Mehrzahl an Armen als Magnetfeldkonzentratoren umfasst, die radial und/oder axial abstehen. Von dem Kern stehen Arme radial nach außen und/oder axial zur Seite ab. Von dem Mantelteil stehen Arme vorzugsweise radial nach innen und/oder auch axial zur Seite ab.

In allen Ausgestaltungen ist es bevorzugt, dass wenigstens ein Arm von einer elektrischen Spule umgeben ist. Besonders bevorzugt ist eine Mehrzahl von Armen jeweils von einer elektrischen Spule umgeben.

Vorzugsweise ist eine radiale Länge eines (radial abstehenden) Armes kleiner als eine Länge des Armes in der axialen Richtung.

Vorzugsweise ist wenigstens eine elektrische Spule um die Achse herum gewickelt und erzeugt im Kern im Wesentlichen ein Magnetfeld in axialer Richtung (radiale Spule).

Die elektrische Spule ist vorzugsweise radial (umlaufend) zwischen dem Kern und dem Mantelteil aufgenommen.

Insbesondere ist die elektrische Spule oder wenigstens eine elektrische Spule innen an dem Mantelteil befestigt. Dann ist die elektrische Spule radial von dem Kern an der ersten Bremskomponente beabstandet. Möglich und bevorzugt ist es auch, dass wenigstens eine elektrische Spule um den Kern gewickelt ist. Eine elektrische Spule kann radial um den Kern herum gewickelt sein. Möglich ist es auch, dass die elektrische Spule axial um den Kern herum gewickelt ist. Dann erstreckt sich eine Symmetrieachse der elektrischen Spule quer zu der Längserstreckung der ersten Bremskomponente.

In bevorzugten Ausgestaltungen sind wenigstens zwei Sternkonturen in dem Bremsgehäuse aufgenommen sind. Die Sternkonturen können gleich und insbesondere auch unterschiedlich ausgestaltet sein.

Vorzugsweise sind zwei Sternkonturen axial voneinander beabstandet aufgenommen. Möglich ist es auch, dass drei, vier oder mehr Sternkonturen (jeweils) axial voneinander beabstandet aufgenommen sind. Jede dieser Sternkonturen kann gleich ausgebildet sein oder auch eine andere Form als die andere Sternkonturen haben.

Es ist bevorzugt, dass jeweils zwei Sternkonturen paarweise gleich ausgebildet sind.

Wenigstens eine Sternkontur ist insbesondere als separater (und vorzugsweise hohler) Ringflansch mit radial abstehenden Magnetfeldkonzentratoren ausgebildet.

Die Magnetfeldkonzentratoren können radial nach außen abstehend ausgebildet sein. Dann ist der Ringflansch vorzugsweise mit dem Kern fest (und vorzugsweise lösbar) verbunden.

Die Magnetfeldkonzentratoren können schräg nach außen abstehend ausgebildet sein. Dann ist der Ringflansch vorzugsweise mit dem Kern fest (und vorzugsweise lösbar) verbunden.

Die Magnetfeldkonzentratoren können seitlich (axial) abstehend ausgebildet sein. Dann ist der Ringflansch vorzugsweise mit dem Kern fest (und vorzugsweise lösbar) verbunden.

Die Magnetfeldkonzentratoren können auch radial nach innen abstehend ausgebildet sein. Dann ist der Ringflansch vorzugsweise mit dem Mantelteil fest (und vorzugsweise lösbar) verbunden.

Die Magnetfeldkonzentratoren können auch schräg nach innen abstehend ausgebildet sein. Dann ist der Ringflansch vorzugsweise mit dem Mantelteil fest (und vorzugsweise lösbar) verbunden.

Die Magnetfeldkonzentratoren können auch seitlich (axial) nach innen abstehend ausgebildet sein. Dann ist der Ringflansch vorzugsweise mit dem Mantelteil fest (und vorzugsweise lösbar) verbunden.

Vorzugsweise weisen wenigstens zwei Sternkonturen eine unterschiedliche Außenkontur auf. Die Außenkontur kann z. B. radial innen und/oder radial außen und/oder an wenigstens einer axialen Seite unterschiedlich sein.

Vorzugsweise weist wenigstens eine Sternkontur radial nach außen abstehende Magnetfeldkonzentratoren auf und ist magnetisch leitend mit und insbesondere auf dem Kern befestigt. Beispielsweise kann die Sternkontur durch eine Verschraubung auf dem Kern gesichert werden.

Vorzugsweise weist wenigstens eine Sternkontur radial nach innen abstehende Magnetfeldkonzentratoren auf und ist magnetisch leitend mit (und insbesondere in) dem Mantelteil befestigt.

Vorzugsweise verläuft ein Magnetfeld der elektrischen Spule durch den Kern und wenigstens eine Sternkontur mit den Magnetfeldkonzentratoren und durch den Spalt und die Wandung des Mantelteils.

Wenn zwei axial beabstandete Sternkonturen umfasst sind, verläuft ein Magnetfeld der elektrischen Spule vorzugsweise axial durch den Kern, axial durch die Wandung des Mantelteils und durch beide Sternkonturen mit den Magnetfeldkonzentratoren und die Spalte zwischen Sternkontur und Kern bzw. Mantelteil.

In besonders bevorzugten Weiterbildungen ist wenigstens eine elektrische Spule in axialer Richtung um den Kern gewickelt und erzeugt im Wesentlichen ein Magnetfeld in radialer Richtung (liegende Spule).

Insbesondere bilden die Magnetfeldkonzentratoren eine (im Querschnitt) sternförmige Außenkontur.

Vorzugsweise weist das Mantelteil über wenigstens einen axialen Abschnitt eine zylindrische Innenoberfläche auf.

Vorzugsweise erstrecken sich die Magnetfeldkonzentratoren über wenigstens ein Winkelsegment über den Außenumfang des Kerns. Insbesondere ist jedes Winkelsegment kleiner 150°.

Vorzugsweise ist außerhalb des Winkelsegments (bzw. der Winkelsegmente) kein Magnetfeldkonzentrator angeordnet.

Vorzugsweise ist die in axialer Richtung um den Kern gewickelte elektrische Spule außerhalb des Winkelsegments (bzw. der Winkelsegmente) an dem Kern aufgenommen. Die elektrische Spule grenzt dann insbesondere an die Oberfläche an.

Vorzugsweise ist ein maximaler (äußerer) Durchmesser der elektrischen Spule in einer radialen Richtung innerhalb einer bzw. der Spulenebene größer als ein minimaler (äußerer) Durchmesser des Kerns in einer radialen Richtung quer und insbesondere nahezu senkrecht oder auch senkrecht zu der Spulenebene. Der minimale Durchmesser muss aber nicht senkrecht zur Spulenebene liegen.

Vorzugsweise erstreckt sich die elektrische Spule um wenigstens einen Arm axial herum. Insbesondere ist eine radiale Spalthöhe zwischen einem Außenende eines Armes und einer Innenoberfläche des Mantelteils geringer als ein radiales Spaltmaß zwischen der Außenoberfläche der ersten Bremskomponente neben dem Arm und der Innenoberfläche des Mantelteils. Neben dem Arm kann die Oberfläche des Grundkörpers ausgebildet sein. Neben dem Arm kann auch eine Oberfläche einer Vergussmasse sein, wenn diese eingefüllt wird, um z. B. das Volumen für das magnetorheologische Medium und insbesondere magnetorheologische Fluid (MRF) zu reduzieren.

Vorzugsweise ist die zweite Bremskomponente axial verschieblich bzw. verschiebbar an der ersten Bremskomponente aufgenommen.

Darüber kann z. B. auch ein Volumenausgleich bei Temperaturänderungen ermöglicht werden.

In bevorzugten Weiterbildungen ist an dem distalen Ende der Kammer ein Klickelement zur Betätigung angeordnet. Vorzugsweise gibt das Klickelement eine fühlbare Rückmeldung beim Betätigen.

Vorzugsweise trennt eine elastische Membran die Kammer (mit dem magnetorheologischen Medium) von dem Klickelement. In bevorzugten Weiterbildungen ist das Klickelement als Schnappscheibe ausgebildet. Vorzugsweise ist eine Änderung des aufgespannten Volumens der Schnappscheibe angepasst an eine Querschnittsfläche der Achse multipliziert mit einem Axialversatz der Schnappscheibe bei Betätigung. Dadurch wird eine Axialverschiebung des Mantelteils gegenüber dem Kern bei einer Betätigung des Klickelements ermöglicht, bei der kein Volumenausgleich oder nur ein geringer Volumenausgleich für die in die Kammer eintretende Achse benötigt wird.

Insbesondere ist die zweite Bremskomponente über zwei Lagerstellen unterschiedlicher Außendurchmesser drehbar an der ersten Bremskomponente aufgenommen, um durch eine Axialverschiebung eine Volumenänderung in einer zwischen der ersten und der zweiten Bremskomponente ausgebildeten Kammer zu bewirken.

Es ist bevorzugt, dass wenigstens eine Abschirmeinrichtung zur wenigstens teilweisen Abschirmung der Sensoreinrichtung vor einem Magnetfeld der elektrischen Spule oder zur Abschirmung anderer Magnetfelder umfasst ist.

Vorzugsweise umfasst die Abschirmeinrichtung wenigstens einen die Magnetringeinheit wenigstens abschnittsweise umgebenden Abschirmkörper, wobei die Abschirmeinrichtung wenigstens eine zwischen dem Abschirmkörper und der Magnetringeinheit angeordnete Trenneinheit und/oder wenigstens eine zwischen dem Abschirmkörper und dem Mantelteil angeordnete magnetische Entkopplungseinrichtung umfasst.

Insbesondere weisen die Trenneinheit und/oder die Entkopplungseinrichtung eine um ein Vielfaches geringere magnetische Leitfähigkeit als der Abschirmkörper auf.

Die Abschirmeinrichtung kann aus mehreren Teilen bestehen und z. B. wenigstens eine oder auch zwei axiale Ringscheibe(n) und wenigstens eine Ringhülse umfassen.

Es ist bevorzugt, dass die Abschirmeinrichtung und die Magnetringeinheit voneinander beabstandet angeordnet sind. Dazwischen kann ein Abstandshalter angeordnet sein. In einfachen Ausgestaltungen kann ein Kunststoffteil wie ein Spritzgussteil dazwischen angeordnet sein und die Teile im definierten Abstand zueinanderhalten.

Vorzugsweise ist zwischen den Bremskomponenten (wenigstens) eine geschlossene (und nach außen abgedichtete) Kammer ausgebildet ist. Die zweite Bremskomponente ist an einem ersten Ende der geschlossenen Kammer an der ersten Bremskomponente (an einer ersten Lagerstelle) drehbar aufgenommen und insbesondere gelagert, wobei die geschlossene Kammer im Wesentlichen oder vollständig mit dem magnetorheologischen Medium gefüllt ist. Das magnetorheologische Medium kann ein magnetorheologisches Fluid sein, welches z. B. Carbonyleisenpartikel enthält. Möglich ist es auch, dass als magnetorheologische Medium z. B. (trockenes oder pulverförmiges) Carbonyleisenpulver (ohne Flüssigkeitszusatz) eingesetzt wird.

Vorzugsweise ist die zweite Bremskomponente axial verschieblich an der ersten Bremskomponente aufgenommen und insbesondere gelagert, sodass sich ein Volumen der geschlossenen Kammer durch eine relative axiale Verschiebung der Bremskomponenten verändert, um einen Ausgleich für temperaturbedingte Volumenänderungen zur Verfügung zu stellen.

Vorteilhaft ist es, wenn die elektrische Spule in axialer Richtung um den Kern gewickelt ist und im Wesentlichen ein Magnetfeld in radialer Richtung erzeugt. Dann ergibt sich der Vorteil, dass durch eine Verlängerung eines Magnetfeldkonzentrators in axialer Richtung ein stärkeres Bremsmoment erzeugbar ist. Gleichzeitig mit der Verlängerung des Magnetfeldkonzentrators kann (in sinnvoller Weise) auch die elektrische Spule verlängert werden, die sich in Längsrichtung der ersten Bremskomponente erstreckt. Mit einer elektrischen Spule, die in axialer Richtung länger ausgebildet ist, wird eine größere Durchtrittsfläche (vom Magnetfeld durchflossene Querschnittsfläche) für das Magnetfeld zur Verfügung gestellt. Deshalb bewirkt eine Verlängerung der ersten Bremskomponente in axialer Richtung auch eine Vergrößerung des Querschnitts des Kerns. Dadurch kann ein stärkeres Bremsmoment durch eine Verlängerung der ersten Bremskomponente in axialer Richtung erreicht werden.

In bevorzugten Ausgestaltungen besteht wenigstens ein Teil der Magnetfeldkonzentratoren aus einem magnetisch leitfähigen Material. Es ist auch möglich, dass ein Teil der Übertragungskomponenten aus einem magnetisch nicht leitfähigen Material besteht. Werden Magnetfeldkonzentratoren eingesetzt, die aus einem magnetisch leitfähigen Material bestehen und werden gleichzeitig auch Übertragungskomponenten eingesetzt, die aus einem magnetisch nicht leitfähigen Material bestehen, so konzentriert sich das Magnetfeld im Bereich der magnetisch leitfähigen Magnetfeldkonzentratoren. Das führt zu der Konzentration des Magnetfeldes (Erhöhung der magnetischen Feldstärke) und zu einer örtlichen Verstärkung (Magnetfeldlinienkonzentration). Zum Beispiel erhöht sich die magnetische Feldstärke im Spalt dadurch von Werten von kleiner 350 kA/m auf Werte bis zu 1.000 kA/m oder darüber. Die (hohe bzw.) konzentrierte Feldstärke zieht mehr Carbonyleisenpartikel aus der magnetorheologischen Flüssigkeit an, es kommt zu einer Carbonyleisen-Anhäufung (Haufenbildung). Dies wiederum erlaubt die Generierung höherer Schubspannungen und damit Bremsmomente.

Da der Zusammenhang zwischen erzeugbarem Bremsmoment und Stärke des Magnetfeldes nicht linear ist und da das erzeugbare Bremsmoment mit stärker werdendem Magnetfeld noch überproportional stärker wird, kann dadurch eine erhebliche Verstärkung des erzeugbaren Bremsmomentes (bei gleichem Bauraum/Abmessungen) erzielt werden. Es ist auch möglich, die Anzahl der Magnetfeldkonzentratoren entsprechend kleiner zu wählen.

Sollten im gegebenen Bauraum höhere Bremsmomente als beim Stand der Technik bei gleichzeitig (sehr) niederen Herstellkosten gefordert sein, so kann die axiale Breite des Magnetfeldkonzentrators sehr klein und als durchgehende Scheibe (geschlossene Kontur) ausgeführt werden. Aus Herstellkostengründen kann dabei auf die Sternkontur oder ähnlich ausgestaltete radial oder axial abstehende Arme mit unterbrechenden Zwischenräumen verzichtet werden. Die speziell gewählte (sehr) kleine Breite und spezielle Kontur des Magnetfeldkonzentrators konzentriert hierbei auch das Magnetfeld und führt wie zuvor beschrieben zu hohen Feldstärken im (Ring)spalt und damit zur Carbonylpartikelkonzentration (Haufenbildung). Zwar sind die Feldstärken im Wirkspalt wegen der größeren Übergangsfläche nicht so hoch wie bei einzelnen Armen, aber für manche Anwendungen ausreichend, besonders wenn ein hoher Kostendruck vorhanden ist.

In allen Ausgestaltungen ist es für eine Erhöhung des erzeugbaren Bremsmomentes nicht nötig, den Durchmesser der ersten Bremskomponente zu erhöhen. Dies ist deshalb sehr wichtig, weil viele Einsatzmöglichkeiten einen größeren Außendurchmesser einer Bremseinrichtung nicht zulassen bzw. ein größerer Außendurchmesser ein gravierender Wettbewerbsnachteil wäre (z.B. ein übergroßes seitliches Einstellrad bei einer Armbanduhr oder bei einem Scrollrad einer Computermaus oder bei einer Daumenwalze an einem Kraftfahrzeug). Für eine Verstärkung/Erhöhung des Bremsmomentes kann die erste Bremskomponente axial länger ausgebildet werden, was bauraumtechnisch kein bzw. ein kleinerer Nachteil ist.

In allen Ausgestaltungen ist es bevorzugt, dass das Mantelteil an einem Drehknopf oder Drehrad ausgebildet ist oder eine solches umfasst. Vorzugsweise kann das Drehteil einstückig mit dem Drehknopf oder Drehrad gebildet werden. Bei solchen Ausgestaltungen ist es bevorzugt, dass der Drehknopf bzw. das Mantelteil "topf"-förmig ausgebildet ist. Der "Deckel" des Mantelteils kann einstückig mit einem als Hülsenteil ausgebildeten Drehteil verbunden sein oder separat daran befestigt werden.

Vorzugsweise besteht das Mantelteil aus einem magnetisch leitenden Material bzw. umfasst ein magnetisch leitendes Hülsenteil und stellt einen Außenring für das Magnetfeld zur Verfügung. Das Magnetfeld zu Erzeugung eines Bremsmomentes verläuft durch die erste Bremskomponente und durchtritt den Spalt an den Magnetfeldkonzentratoren, die magnetisch leitend ausgebildet sind. Von den Magnetfeldkonzentratoren aus tritt das Magnetfeld in das Mantelteil ein. Dort verlaufen die Magnetfeldlinien zurück, bevor die Magnetfeldlinien wieder in die erste Bremskomponente eintreten. Somit liegt ein geschlossener Magnetkreis bzw. liegen geschlossene Magnetfeldlinien vor.

An den Magnetfeldkonzentratoren bildet sich unter dem Einfluss eines Magnetfeldes bei einer Relativdrehung der ersten und der zweiten Bremskomponente relativ zueinander ein Keileffekt aus, so wie er grundsätzlich in der WO 2012/034697 A1 beschrieben ist. Die Offenbarung dieser Druckschrift wird vollständig mit in diese Anmeldung aufgenommen. Das Bremsmoment bei der vorliegenden Erfindung wird ebenfalls durch den Keileffekt bzw. die Haufenbildung an den Magnetfeldkonzentratoren erzeugt, auch wenn die Magnetfeldkonzentratoren sich nicht um sich selbst drehen können, sondern an der ersten oder zweiten Bremskomponente befestigt sind.

Vorzugsweise ist wenigstens eine radiale Wandstärke des Mantelteils bzw. des Hülsenteils des Mantelteils wenigstens halb so groß wie eine Spaltbreite des Spaltes und/oder eine radiale Länge eines Magnetfeldkonzentrators. Vorzugsweise ist eine radiale Wandstärke (des Hülsenteils) des Mantelteils größer als 3/4 der Spaltbreite des Spaltes. Die radiale Wandstärke (des Hülsenteils) des Mantelteils kann insbesondere auch größer sein als eine radiale Länge eines Magnetfeldkonzentrators. Durch eine genügende Wandstärke des aus einem magnetisch leitenden Materials bestehenden Mantelteils bzw. des Hülsenteils des Drehteils kann gewährleistet werden, dass die gewünschte Feldstärke des Magnetfeldes im Bereich der Wälzkörper erzeugt werden kann, um ein hohes Bremsmoment erzeugen zu können.

In allen Ausgestaltungen ist es bevorzugt, dass eine Länge der ersten Bremskomponente in der axialen Richtung größer ist als eine Länge einer Magnetfeldkonzentrators in der axialen Richtung. Wenn der Magnetfeldkonzentrators in der axialen Richtung kürzer ausgebildet ist als die erste Bremskomponente führt dies zu einer dreidimensionalen Konzentration des Magnetfeldes im Randbereich des Magnetfeldkonzentrators. Das Magnetfeld kann den Spalt praktisch nur in den Abschnitten durchtreten, in denen sich ein Magnetfeldkonzentrator befindet.

Vorzugsweise ist eine Länge des Spaltes in der axialen Richtung wenigstens doppelt so groß wie eine Länge eines Magnetfeldkonzentrators in axialer Richtung. Möglich und bevorzugt ist es auch, dass zwei oder mehr Magnetfeldkonzentratoren in axialer Richtung hintereinander angeordnet sind.

Vorzugsweise ist die erste Bremskomponente im Wesentlichen zylindrisch ausgebildet und umfasst einen wenigstens abschnittsweisen rotationssymmetrischen oder zylindrischen Grundkörper als Kern und die elektrische Spule bzw. die elektrischen Spulen. Möglich ist es auch, dass beispielsweise eine Kugel zum Lagern eines Drehknopfes umfasst ist, die am distalen Ende zentral angeordnet sein kann, um eine einfache und reibungsarme Lagerung zwischen der ersten Bremskomponente und der zweiten Bremskomponente zur Verfügung zu stellen.

Die elektrische Spule kann bei Einsatz einer "liegenden Spule" in Axialnuten und Quernuten des zylindrischen Grundkörpers (der ersten Bremskomponente) gewickelt sein. Bei Einsatz einer "radialen Spule" kann die elektrische Spule in einer umlaufenden Nut gewickelt sein. Vorzugsweise sind die jeweiligen Nuten wenigstens teilweise mit Vergussmasse gefüllt oder umspritzt. Dadurch wird verhindert, dass in den Bereich der Spulendrähte magnetorheologisches Medium bzw. magnetorheologisches Fluid eintritt. Das könnte zu einer Entmischung des Fluids führen.

Vorzugsweise weist der Halter eine Kabeldurchführung auf. Durch den Halter bzw. durch die Kabeldurchführung des Halters können Anschlusskabel für die Spule und/oder Sensorkabel und dergleichen mehr geführt werden. Dadurch werden eine leichte Montage und eine kostengünstige Herstellung ermöglicht.

Vorzugsweise weist der Halter eine Aufnahme zur drehfesten Verbindung mit der ersten Bremskomponente auf. Dabei kann der Halter die erste Bremskomponente kraftschlüssig und/oder formschlüssig aufnehmen. Im Betrieb wird das Bremsmoment zwischen der ersten Bremskomponente und der zweiten Bremskomponente über den Halter abgeführt.

Vorzugsweise weist der Halter eine zylindrische Lauffläche für ein Lager auf und stützt das Mantelteil drehbar auf dem Halter ab.

An der zylindrischen Lauffläche ist vorzugsweise eine Dichtung zum Abdichten des Spaltes angeordnet, wobei die Dichtung insbesondere näher an dem Spalt angeordnet ist als das Lager. Dadurch wird das Lager zuverlässig vor dem magnetorheologischen Medium geschützt. Eine solche Ausgestaltung ermöglicht einen kompakten Aufbau und einen zuverlässigen Betrieb. Das Lager kann z. B. ein Gleit- oder Wälzlager sein.

Vorzugsweise ist die zylindrische Lauffläche gehärtet und/oder weist eine höhere Oberflächenqualität als die radial äußere Oberfläche der Aufnahme auf. Dadurch können Fertigungskosten verringert werden.

In vorteilhaften Ausgestaltungen weist die zylindrische Lauffläche einen Außendurchmesser auf, der wenigstens 3 mm kleiner ist als ein Außendurchmesser der Aufnahme des Halters.

Vorzugsweise ist der Halter an einer Konsole oder einer anderen Komponente befestigt.

In bevorzugten Weiterbildungen umfasst eine Gerätekomponente wenigstens eine magnetorheologischen Bremseinrichtung, wie zuvor beschrieben. Eine solche Gerätekomponente kann wenigstens eine Benutzerschnittstelle, ein Bedienpanel, ein Display, ein berührungsempfindliches Display mit oder ohne haptischem Feedback und/oder wenigstens einen Sensor umfassen.

Möglich ist auch die Verwendung in einer haptischen Bedieneinrichtung, die wenigstens eine magnetorheologischen Bremseinrichtung umfasst. Vorzugsweise ist weiterhin eine Benutzerschnittstelle, ein Bedienpanel, ein Display, ein berührungsempfindliches Display mit oder ohne haptischem Feedback und/oder wenigstens ein Sensor umfasst. Eine solche Ausgestaltung ermöglicht neben der Bedienung auch gleichzeitig die Anzeige oder Ausgabe von Informationen während der Bedienung. Damit wird beispielsweise ein Bedienknopf mit gleichzeitigem Ausgabedisplay ermöglicht.

In allen Ausgestaltungen ist es möglich, dass an dem Halter ein druckempfindlicher Sensor angebracht ist oder dem Halter ein solcher Sensor zugeordnet ist. Beispielsweise kann in dem Halter ein druckempfindlicher Sensor angebracht sein. Möglich ist es aber auch, dass ein Piezo-Sensor am Unterteil etc. angebracht ist. Der Halter kann auch zweiteilig ausgebildet sein und eine axiale Verschiebung der beiden Teile gegeneinander registrieren. Dabei kann eine haptische Rückmeldung erfolgen.

In allen Ausgestaltungen ist es bevorzugt, dass eine Differenz zwischen einem lichten Innendurchmesser (des Hülsenteils) des Mantelteils und einem Außendurchmesser der ersten Bremskomponente größer 3 mm und kleiner 90 mm beträgt. Es ist ebenso bevorzugt, dass ein Außendurchmesser des (Hülsenteils) Mantelteils zwischen 5 mm oder 10 mm und 120 mm beträgt. Vorzugsweise beträgt eine Höhe des Mantelteils zwischen 5 mm und 120 mm. In allen Ausgestaltungen ist es bevorzugt, dass eine Steuereinrichtung umfasst ist, welche dazu ausgebildet ist, mit der elektrischen Spule eine variable Bremswirkung hervorzurufen.

Insgesamt arbeitet die vorliegende Erfindung besonders bevorzugt nach dem Grundprinzip der Keilklemmung, wobei ein Magnetfeldkonzentrator mit einem gewissen Abstand an den Wänden vorbei streift. Durch ein Magnetfeld entsteht der Keileffekt, sodass ein hohes Bremsmoment erzeugbar ist.

Durch den Einsatz einer "liegenden Spule" kann zudem noch eine bessere Skalierbarkeit erreicht werden. Dadurch wird es möglich, mittels längerer Magnetfeldkonzentratoren und einer axial längeren elektrischen Spule ein skalierbares und größeres Bremsmoment erzeugt. Dabei muss der Durchmesser der ersten Bremskomponente nicht größer gewählt werden, um ein entsprechendes Magnetfeld durchzuleiten, denn mit einer axialen Verlängerung des Kerns wird auch die Fläche des Kerns (Querschnittsfläche) größer. Gegebenenfalls kann die axiale Länge auch erheblich reduziert werden, wenn nur ein relativ geringes Bremsmoment benötigt wird. Der Bauraum kann dementsprechend angepasst werden.

Ein weiterer Vorteil ist, dass auch für eine Großserie das Herausführen des elektrischen Anschlusskabels für die elektrische Spule einfach möglich ist. Es kann über einfache Mittel eine Dichtheit der magnetorheologischen Bremseinrichtung und ein Skalieren ermöglicht werden.

Grundsätzlich kann über (in axialer Richtung) längere Magnetfeldkonzentratoren ein größeres Moment von der magnetorheologischen Bremseinrichtung erzeugt werden, da die Wirklänge steigt. Gleichzeitig wird durch die größere Kernfläche gewährleistet, dass die Magnetfeldkonzentratoren immer einer entsprechenden magnetischen Flussdichte ausgesetzt werden. Die Magnetfeldstärke beim "Keil" an den Magnetfeldkonzentratoren kann höher gewählt werden als im Stand der Technik. Es können lange Magnetfeldkonzentratoren oder mehrere axial versetzte Magnetfeldkonzentratoren eingesetzt werden, denen ein genügend starkes Magnetfeld zugeleitet werden kann.

Insbesondere geht das von elektrischen Spule erzeugte Magnetfeld bei Einsatz einer "radialen Spule" axial durch den Kern, radial durch die Magnetfeldkonzentratoren und schließt sich axial über das (Hülsenteil bzw.) das Mantelteil bzw. den Außenzylinder. Dabei schließen sich die Magnetfeldlinien einmal in der einen und z. B. unteren bzw. linken und einmal in der anderen und z.B. oberen bzw. rechten Hälfte des Mantelteils. In einfachen Ausgestaltungen verläuft der Magnetfluss somit im Wesentlichen zweidimensional. Dabei ist es egal, wie lang oder hoch die Magnetfeldkonzentratoren ausgebildet werden. Dadurch kann eine beliebige Skalierung in der Länge erreicht werden, da die Magnetfeldübertragungsfläche mit wächst.

Bei konzentrisch um die Längsrichtung der ersten Bremskomponente gewickelten elektrischen Spulen ("radialen Spulen") bleibt die Querschnittsfläche im Kern hingegen gleich und kann ein Nadelöhr für das Magnetfeld bilden, solange der Durchmesser nicht verändert wird. Bei Drehknöpfen im Kraftfahrzeug weist der Kern regelmäßig einen genügenden Durchmesser auf, um das gewünschte Bremsmoment aufzubringen. Dort ist der benötigte Durchmesser der ersten Bremskomponente nicht besonders nachteilig für den Bauraumbedarf, die Einbauabmessungen und das Gewicht der magnetorheologischen Bremseinrichtung. Vorteilhaft ist, dass sich bei den nun eingesetzten feststehenden Magnetfeldkonzentratoren nicht die Drehzahl von Wälzkörpern ändert, was nachteilig sein kann.

Werden längere Magnetfeldkonzentratoren eingesetzt, so kann der Bremseffekt eines sich in axialer Richtung lang erstreckenden Magnetfeldkonzentrators besser sein als bei zwei kurzen, die die gleiche Gesamtlänge aufweisen. Das liegt unter anderem daran, dass die Flüssigkeit abstandsmässig länger verdrängt werden muss, da der Rand weiter entfernt ist (hydrodynamischer Druck). Zwei kurze Sternkonturen können wiederum Vorteile aufgrund eines symmetrischen Aufbaus aufweisen.

In bevorzugten Ausgestaltungen weist die magnetorheologische Bremseinrichtung einen Durchmesser (des Hülsenteils) des Mantelteils von zwischen etwa 5 und 80 mm (+/- 20%) auf in bevorzugten Ausgestaltungen etwa 10 bis 40 mm.

Ingesamt stellt die Erfindung eine vorteilhafte magnetorheologische Bremseinrichtung ("MRF Bremse") zur Verfügung. Dabei ist der Außendurchmesser der MRF Bremse besonders bei haptischen Anwendungen meist vorgegeben. Hier gibt es ergonomische Richtlinien. Deshalb kann der Kernquerschnitt generell nicht so einfach vergrößert werden, weil damit der Außendurchmesser auch größer wird (Knopf- oder Daumenrad- oder Mausradaußendurchmesser; Fläche für die Finger). Zudem benötigt man mit größer werdendem Außendurchmesser wieder mehr Sperrmoment, da der Momentenabstand deswegen größer wurde (Die Fingerkraft, also die (Tangential)kraft zwischen den Betätigungsfinger(n) und dem Bremselement bzw. dem Außenoberfläche des Bremselements muss bzw. sollte gleich bleiben, da einerseits vom Benutzer nur eine bestimmte Kraft aufgebracht werden kann und die notwendigen Kräfte an den Fingern (Fingerspitzen) für das Wohlbefinden bei der Betätigung (Bedienqualität) wichtig sind).

Die elektrische Spule (Elektrospule) kann sich in bevorzugten Ausgestaltungen axial erstrecken. Das von der Spule erzeugte Magnetfeld geht dann radial durch den Kern, dann durch die Magnetfeldkonzentratoren und schließt sich über den Außenzylinder (jeweils durch die entgegengesetzten Hälften). Dies bleibt immer gleich, egal wie hoch (oder lang) die Wälzkörper bzw. MRF Bremse ist.

Die Erfindung erreicht das Ziel, eine möglichst einfache aber dennoch gut skalierbare MRF Bremse mit hohem Bremsmoment bei einem kompakten Außendurchmesser zu erhalten.

Statt einem (zylindrischen) Spulendraht kann auch ein Flachmaterial oder Draht mir angepasster Kontur aus Kupfer oder einem anderen geeigneten Werkstoff verwendet werden.

Der Kern, die Magnetfeldkonzentratoren und der Außenzylinder können aus einem einfachen Stahl (z. B. S235), ohne große Anforderungen an die Oberflächenbeschaffenheit und -härte, gefertigt sein, welcher vorzugsweise gute magnetische Eigenschaften aufweist. Die sich zueinander bewegenden und das Bremsmoment erzeugenden Flächen können rau sein oder/und eine Oberflächenstruktur aufweisen (z. B. Rändel, Pyramiden...).

Der Kern samt elektrischer Spule und Vergussmasse werden vorzugsweise in einem "Halter" zentriert und fixiert (kraftschlüssige oder formschlüssige Verbindung) und das Gegendrehmoment über diesen an eine Konsole oder Grundplatte oder Aufnahmeplatte oder ein Gehäuse abgeleitet. Der Halter hat vorzugsweise eine Bohrung, durch welche die Kabel geführt werden. Vorzugsweise dichtet ein Dichtelement (z. B. O-Ring) das Kabel gegenüber dem Halter bzw. dem Innenraum ab, sodass vom Innenraum keine Flüssigkeit über das Kabel nach außen gelangen kann. Zusätzlich zum (Spulen-)Kabel kann auch ein Temperatursensorkabel oder anderes Sensorkabel durch diese Öffnung geführt werden.

Der Halter kann auch aus einem anderen Material wie der Kern, Walzkörper oder Außenzylinder hergestellt sein. Die Durchmesserreduktion des Halters an der Lauffläche hat den Vorteil, dass der Reibradius für das Dichtelement geringer wird, was die Gesamtreibung reduziert. Zudem kann wegen der dadurch erhöhten Bauhöhe ein Lagerelement verwendet werden, welches den gleichen Lageraußendurchmesser aufweist wie der Innendurchmesser des Mantelteils. Dies reduziert die Herstellkosten vom Mantelteil, es wird kein fertigungstechnischer Absatz (Eindrehung) benötigt. Die bevorzugte Walzkörperhöhe liegt zwischen 3 und 6 mm, kann aber auch 1 oder 2 mm sein. In diesem Bereich ist es schwierig, gute Lager oder Dichtelemente zu erhalten, wenn der Innendurchmesser vom Halter nicht zusätzlich Bauhöhe schafft.

Über dem Außenzylinder bzw. dem Mantelteil kann ein dekoratives oder anderes Element angebracht werden, z. B. ein gummierter Knopf.

Axial oben gesehen ist zwischen dem Außenzylinder und der Vergussmasse vorzugsweise eine Kugel oder ein kugelförmiges kugelförmiges oder kugelähnliches Bauteil (kann auch eine Halbkugel sein). Dies führt die zwei Teile relativ zueinander. Vorzugsweise ist die Kugel in der Vergussmasse fixiert und die innere axiale Stirnseite des Außenzylinders dreht sich relativ dazu. Damit wird eine einfache, reibungsarme und kostengünstige Lagerung (Lagerstelle) geschaffen. Möglich ist auch eine Kegelform oder dergleichen. Statt dieser Art der Lagerung kann aber auch jede andere Art der Lagerung gewählt werden (z. B. Gleit- oder Wälzlagerung).

Vorzugsweise besteht zumindest eine vom Magnetfeld durchflossene Komponente wenigstens teilweise oder vollständig aus dem Werkstoff FeSi3P.

Grundsätzlich kann eine Sternkontur nicht auf den Kern aufgebracht werden, sondern auch von innen in das umgebende Mantelteil oder Hülsenteil. Eine solche Konstruktion kann Vorteile bei der Spulenauslegung bringen. Außerdem gewinnt man Platz. Es können auch in diesem Fall verschiedene Spulenvarianten gewählt werden. Möglich ist eine axiale Spule bzw. "liegende Spule". Möglich ist auch eine Spule, die um die Drehachse herum gewickelt ist. Vorzugsweise ist radial außerhalb der elektrischen Spule kein Kernmaterial mehr vorhanden, da sonst das Magnetfeld darüber geschlossen werden könnte, wodurch magnetische Verluste entstehen können. Denkbar ist es auch, mehr als eine "liegende Spule" zu verwenden, je nachdem, wie man sie positioniert. Eine radiale Spule wäre auch gut denkbar, da so das Feld über alle "Zähne" bzw. Magnetfeldkonzentratoren gleichzeitig geschlossen wird.

In bevorzugten Weiterbildungen aller Ausgestaltungen hängt das maximal erzeugbare Drehmoment (Feldstärkenverlauf im Wirkspalt; Keileffekt) und/oder die Reaktionszeit (die Zeit, bis das Moment bei schlagartiger Bestromung oder Stromsprüngen anliegt = Sprungantwort) von dem gewähltem Einlaufwinkel bei den Armen bzw. den jeweils distalen Enden der Magnetfeldkonzentratoren ab. Der durch die Außengestaltung des radialen Endes der Arme und der Gegenfläche erzeugte Winkel und die Flächenlänge beeinflusst beim Aufbau eines Magnetfeldes bzw. der Feldstärke im Wirkspalt das maximal erzeugbare Drehmoment und die Reaktionszeit. Flachere (kleinere) Einlaufwinkel und/oder längere Flächen erhöhen das erzielbare Moment. Größere (steilere) Einlaufwinkel und oder kürzere Flächen verkürzen die Reaktionszeit. Flachere Winkel sind z. B. ein Winkel zwischen 0° und 10°, oder bevorzugt zwischen 10° und 20°. Größere Winkel sind zwischen 20° und 30° oder zwischen 30 und 45°. Möglich ist auch, dass negative Winkel gemacht werden, also Richtung innen gekrümmt. Z. B. -5°.

Es kann auch vorteilhaft sein, verschiedene Konturen/Winkel/Formen zu mischen. Ein Zacken/Zahn der Sternkontur erzeugt dann bei niederen Drehzahlen höhere Momente, der andere Zacken/Zahn bei mittleren Drehzahlen und der dritte Zacken/Zahn bei hohen Drehzahlen. So kann eine Bremsvorrichtung zur Verfügung gestellt werden, welche über das ganze Drehzahlband hohe Momente erzeugt.

Eine Scheibe oder ein Ringflansch ohne Sternkontur ist einfacher zu fertigen und kann so günstiger gefertigt werden. Die Bremsleistung (Bremsmoment) ist aber nicht dieselbe. Je nach Anforderungen an Bauraum, Herstellkosten und möglichem Bremsmoment kann somit entweder eine Sternkontur (für höhere Leistungsdichten) oder auch eine durchgehende Scheibe bei geringeren Anforderungen an die Leistungsdichte aber höheren Anforderungen an die Herstellkosten verwendet werden. Die Scheibe kann rotationssymmetrisch ausgebildet sein.

Zu Berücksichtigen sind aber neben dem unterschiedlichen Bremsmoment der verschiedenen Konturen zusätzlich noch verschiedene Ansprechzeiten. Je mehr magnetisierbares Material verbaut wird, desto länger braucht das Magnetfeld, um das gesamte Material zu magnetisieren und die volle Leistung zu erbringen (Induktivität). Das bedeutet, dass weniger Material die Ansprechzeit des Aktors verkürzt.

Es ist also ein zusätzliches Kriterium bei der Wahl der Kontur, welche Ansprech-/Schaltzeiten für die Anwendung notwendig sind. Je nach Kunde und Einsatzzweck ändern sich diese Anforderungen. Ganz feine Ticks/Rippel (wechselndes Drehmoment) benötigen sehr kurze Ansprechzeiten (wenige Millisekunden).

Typische Abmessungen bzw. Werte der Konturelemente bzw. "Zähne" von Sternkonturen betragen 5% bis 15% von dem Gesamtdurchmesser. Z. B. ist in einer konkreten Ausgestaltung der maximale Durchmesser der Sternkontur (mit nach außen ragenden Konturelementen bzw. "Zähnen") 36 mm und die Höhe eines Konturelements bzw. Magnetfeldkonzentrators bzw. der Zähne beträgt etwa 2,5 mm. Ein minimaler Durchmesser beträgt somit 31 mm. Das entspricht einer relativen Größe von 7% des Durchmessers. Eine Sternkontur mit typischen Abweichungen von der Scheibenform wären z. B. Vertiefungen von 5-10% des gesamten Durchmessers.

Bevorzugt ist ein Bereich der Tiefe der Vertiefungen von 0,25% bis 25%. Insbesondere zwischen 0,5 % und 10 %.

Die Fertigungskosten werden bei kleineren Höhen der Zähne geringer. Deshalb kann es vorteilhaft sein, nur sehr kleine Abweichungen von der runden Scheibe zu verwenden.

Eine Sternkontur mit geringeren Abweichungen von der Scheibenform wären z. B. kleine Einbuchtungen von 1-3% des gesamten Durchmessers.

Auch die Breite der Sternkontur kann variieren. Ein bevorzugten Ausgestaltungen liegt die Breite zwischen 1 mm und 25 mm. Konkret wurden 3 mm und 6 mm Breite erfolgreich getestet.

Vorzugsweise wird insbesondere die erfindungsgemäße haptische Bedieneinrichtung verwendet, um eine hohe Leistungsdichte eine Bremseinrichtung oder Bremseinheit mit magnetorheologischer Flüssigkeit zu erzeugen, wobei dies durch Konturelemente erzielt wird, welche das Magnetfeld konzentrieren.

Insbesondere wird damit das Carbonyleisenpartikel aus der Umgebung angezogen und im Magnetfeldübergangsbereich konzentriert.

Die Anmelderin behält sich vor, ein Verfahren zum Erzeugen einer erhöhten Leistungsdichte einer Bremseinrichtung mit zwei Bremskomponenten und mit magnetorheologischer Flüssigkeit und mindestens einer elektrischen Spule zu beanspruchen, wobei die erhöhte Leistungsdichte durch eine feststehende Bremskomponente und ein sich rotativ um die Mittelachse der feststehende Bremskomponente bewegende und mit diesem magnetisch direkt in Kontakt stehenden Bremskomponente erzeugt wird, wobei Konturelemente an einer der beiden Bremskomponente angeordnet und insbesondere damit drehfest verbunden sind, welche das Magnetfeld konzentrieren.

Eine weiteres Verfahren dient zum Erzeugen einer hohen Leistungsdichte mit einer Bremseinrichtung mit magnetorheologischer Flüssigkeit und mindestens einer elektrischen Spule, wobei dies durch ein feststehendes Element und ein sich rotative um die Mittelachse des feststehenden Elementes bewegendes und mit diesem magnetisch direkt in Kontakt stehenden Element erzeugt wird, welche das Magnetfeld konzentrieren.

Insbesondere werden Carbonyleisenpartikel aus der Umgebung angezogen und im Magnetfeldübergangsbereich konzentriert.

Vorzugsweise ist die sich rotativ um die Mittelachse bewegende Bremskomponente einteilig.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1a-1f: schematische dreidimensionale Ansichten von Gerätekomponenten mit einer magnetorheologischen Bremseinrichtung;
- Figuren 2a-2c: schematische Querschnitte einer weiteren Gerätekomponente mit einer magnetorheologischen Bremseinrichtung;
- Figuren 3a-3b: eine magnetorheologische Bremseinrichtung mit einem Keildämpfer mit zwei Sternkonturen, jeweils auf einer Seite der elektrischen Spule;
- Figur 4: einen anderen Querschnitt einer magnetorheologischen Bremseinrichtung;
- Figur 5: weitere schematische Querschnitte einer magnetorheologischen Bremseinrichtung im Schnitt;
- Figur 6: noch einen schematischen Querschnitt einer magnetorheologischen Bremseinrichtung;
- Figur 7a-7e: eine weitere Gerätekomponente;
- Figuren 8a-8c: mögliche Drehmomentverläufe über dem Drehwinkel einer magnetorheologischen Bremseinrichtung einer erfindungsgemäßen Gerätekomponente;
- Figuren 9a-e: schematische Ansichten noch einer weiteren Gerätekomponente mit einer magnetorheologischen Bremseinrichtung;
- Figuren 10: einen Querschnitt einer anderen Gerätekomponente mit einer magnetorheologischen Bremseinrichtung; und
- Figuren 11a-c: schematische Ansichten noch einer Gerätekomponente mit einer magnetorheologischen Bremseinrichtung;

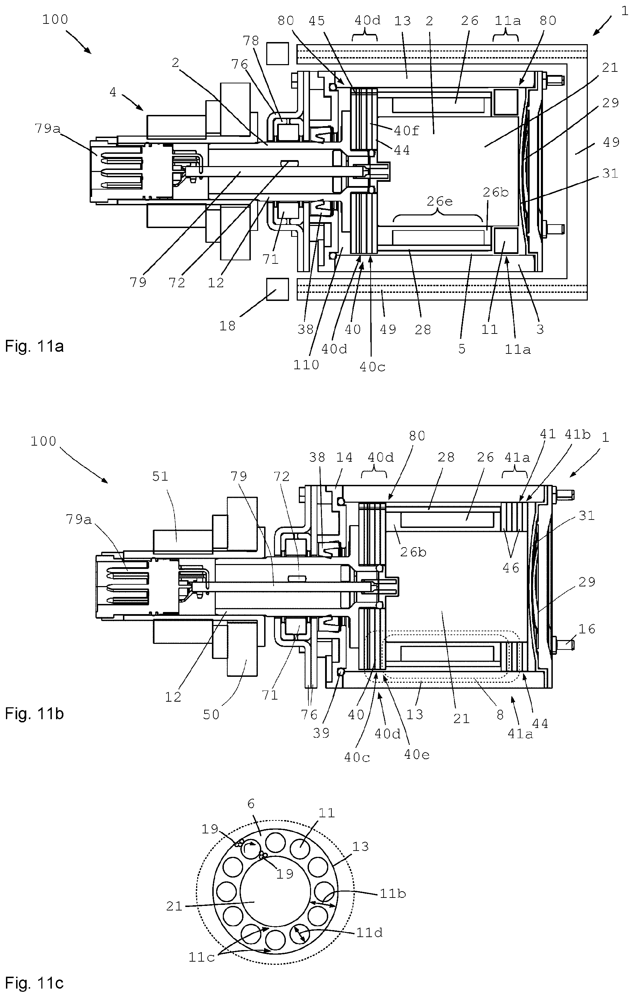

- Figuren 11a-c: schematische Ansichten noch einer Gerätekomponente mit einer magnetorheologischen Bremseinrichtung;

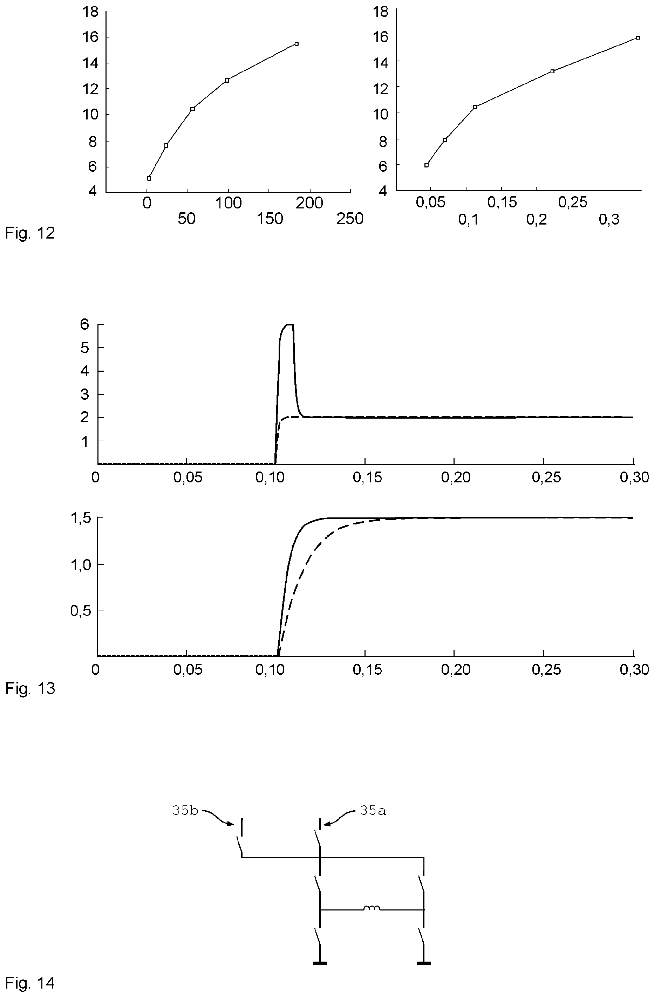

- Figur 12: Drehmomentverläufe eines elektrischen Motors und einer magnetorheologischen Bremseinrichtung über der elektrisch eingebrachten Leistung
- Figur 13: die sich ergebenden Bremsmomentverläufe einer magnetorheologischen Bremseinrichtung für zwei unterschiedliche Stromstärkenverläufe über der Zeit; und
- Figur 14: eine stark schematische Schaltung zur Ansteuerung der elektrischen Spule.

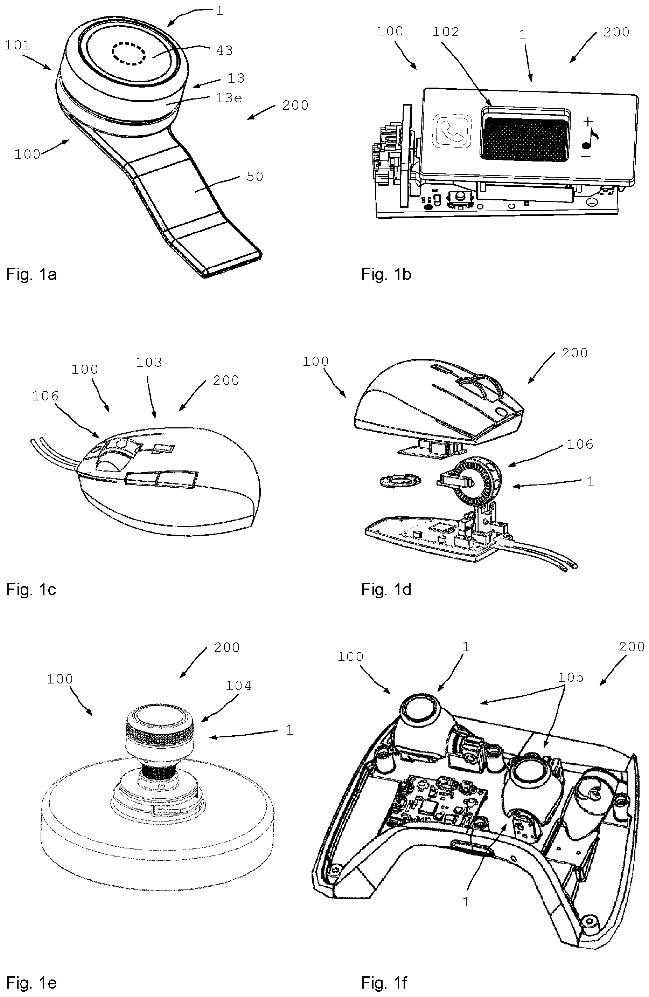

Figuren 1a bis 1f zeigen mehrere erfindungsgemäße Gerätekomponenten 200, in denen die magnetorheologische Bremseinrichtung 1 eingesetzt werden kann. Die Gerätekomponenten 200 sind jeweils als haptische Bedieneinrichtung 100 ausgeführt.

Figur 1a zeigt einen haptischen Bedienknopf 101. Der Bedienknopf ist über die Konsole 50 befestigt. Der Bedienknopf 101 wird über das Mantelteil 13 oder Hülsenteil 13e bedient. Die Benutzerschnittstelle 43 kann zusätzlich genutzt werden, um Informationen zu übermitteln.

In Figur 1b ist die Gerätekomponente 200 als Daumenwalze 102 mit haptischer Bedieneinrichtung 100 dargestellt. Die Daumenwalze 102 ist bevorzugt beispielsweise in Lenkrädern einsetzbar. Die Daumenwalze ist jedoch nicht auf diesen Anwendungsfall beschränkt. Die Daumenwalze 102 kann allgemein je nach Einbausituation auch mit jedem anderen Finger nutzbar sein.

In Figur 1c und Figur 1d ist die erfindungsgemäße Gerätekomponente 200 als Computermaus 103 ausgeführt. Die haptische Bedieneinrichtung 100 ist in dem Mausrad 106 untergebracht. Die magnetorheologische Bremseinrichtung 1 kann genutzt werden, um ein haptisches Feedback zu steuern.

Figur 1d zeigt einen Joystick 104 als haptische Bedieneinrichtung 100, in welchem eine magnetorheologische Bremseinrichtung 1 untergebracht ist. Außerdem ist die erfindungsgemäße magnetorheologische Bremseinrichtung 100 auch in einem Gamepad 105 bevorzugt nutzbar, um dem Spieler in Abhängigkeit der Spielsituation ein haptisches Feedback zu geben.

In diesen Ausführungsbeispielen weist die magnetorheologische Bremseinrichtung 1 ein Mantelteil 13 oder Drehteil bzw. Hülsenteil 13e auf, welches drehbar aufgenommen ist. Das zur Drehung des Mantelteils 13 oder Drehteils 13 erforderliche Drehmoment ist einstellbar.

Auf der Oberseite der magnetorheologischen Bremseinrichtung 1 kann eine Benutzerschnittstelle 43 angeordnet sein. Eine solche Benutzerschnittstelle 43 kann beispielsweise als Anzeigeeinrichtung oder auch als berührungsempfindliche Eingabemöglichkeit (Touchpad, Bewegungs- und Gestensteuerung, Bilderkennung ...) ausgebildet sein.

Eine haptische Bedieneinrichtung 100 kann beispielsweise zur Bedienung von Maschinen, Medizingeräten oder zur Verwendung im und für das Kraftfahrzeug eingesetzt werden. In einem Fahrzeug kann die haptische Bedieneinrichtung 100 beispielsweise zur Bedienung von Klimaanlagen, Radios, dem Entertainment, der Navigation, der Distanzkontrolle, dem Fahrassistenten, zur Einstellung der Sitze und zur Bedienung des Infotainments eingesetzt werden. Möglich ist auch der Einsatz an sonstigen Geräten oder anderen Vorrichtungen.

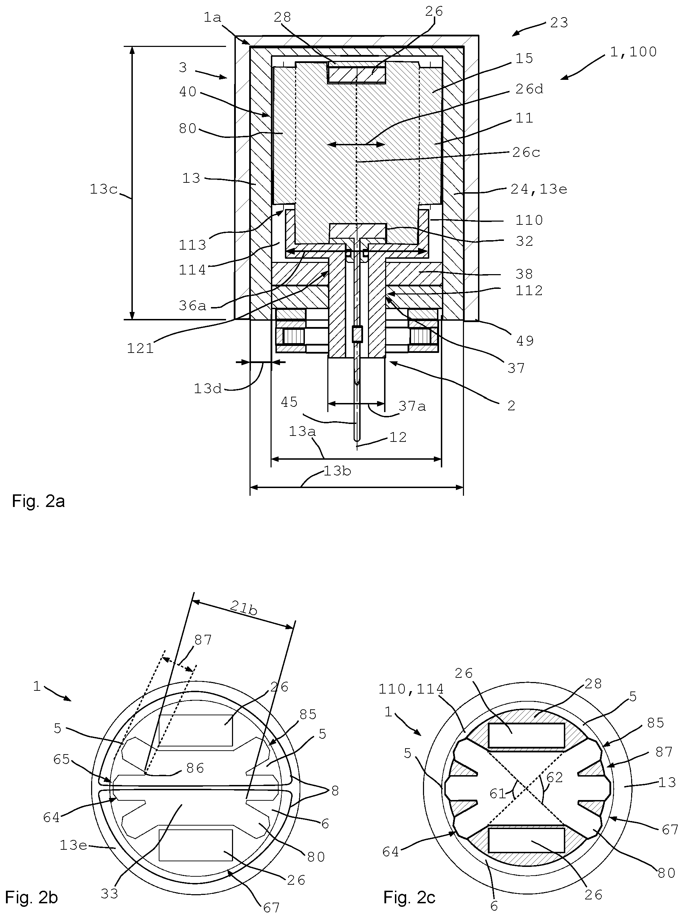

Figur 2a zeigt eine erfindungsgemäße Gerätekomponente 200 im Schnitt mit einer erfindungsgemäßen magnetorheologischen Bremseinrichtung 1. Es sind die Quernuten 32 erkennbar, in denen die elektrische Spule 26 der Magnetfelderzeugungseinrichtung 113 an den axialen Enden des Kerns 21 gewickelt ist. Anschlusskabel 45 werden hier nach unten herausgeführt. Das Magnetfeld erstreckt sich innerhalb des Kerns 21 senkrecht zu der Spulenebene 26c in radialer Richtung 26d. In axialer Richtung ist zum Abschluss an beiden Enden jeweils Vergussmasse 28 vorgesehen. Im Bereich der Kabeldurchführung 35 ist eine separate Dichtung über beispielsweise den eingezeichneten O-Ring oder dergleichen vorgesehen.

Die Wandstärke des hier zylindrischen Mantelteils berechnet sich aus der zwischen Außendurchmesser 13b und Innendurchmesser 13a des Mantelteils 13.

Eine Länge bzw. Höhe 13c des Magnetfeldkonzentrators 80 und des Mantelteils 13 bzw. des Hülsenteils 13e oder der zweiten Bremskomponente 3 in axialer Richtung 20 beträgt vorzugsweise zwischen 1 mm und 100 mm oder zwischen 5 mm und 90 mm. Außen kann auf der zweiten Bremskomponente 3 ein Überzug 49 angebracht sein, sodass das äußere Erscheinungsbild des Drehknopfes 23 im Wesentlichen durch die Oberfläche des Überzugs 49 bestimmt wird.

Das Material des Hülsenteils 13e oder des Mantelteils 13 insgesamt ist magnetisch leitend und dient zur Schließung des Magnetkreises. Eine Wandstärke 13d des Hülsenteils 13e ist vorzugsweise wenigstens halb so groß wie eine radiale Erstreckung der Magnetfeldkonzentratoren 80. Das Mantelteil 13 bildet einen Außenring 24.

Der Durchmesser 36a der Aufnahme 36 ist vorzugsweise erheblich größer als der Durchmesser 37a der zylindrischen Lauffläche 37. Dadurch wird die Reibung an der Dichtung 38 reduziert. Außerdem können standardisierte Lager eingesetzt werden.

Ein (angeflanschter) Sensor (Drehgeber, Winkelgeber) detektiert die Drehzahl (den Verdrehwinkel) der Bedieneinheit.

Es ist auch möglich, den Kern 21 und auch den Halter 4 zweiteilig auszuführen. Bevorzugt verläuft die Trennung entlang der in Figur 2 gezeichneten Mittellinie, wodurch sich eine linke und rechte (Kern)hälfte ergibt. Die zwei Kernhälften können durch ein magnetisch nicht leitendes Element (z. B. Dichtung) voneinander beabstandet sein. Vorzugsweise ist das Vergussmassenvolumen 28 dann ein Teil der Kernhälfte(n), wodurch sich ein Halbkreiselement mit einer umlaufenden Nut auf der Trennfläche für die Elektrospule 26 ergibt. Weiters bevorzugt wird die Aufnahme 36 auch in zwei Hälften getrennt. Eine Aufnahmehälfte kann auch mit einer Kernhälfte einen Teil bilden (einteilig ausgeführt werden) oder eine Kernhälfte mit einer kompletten Aufnahmeeinheit 36 einteilig ausgeführt werden.

Hier ist die haptische Bedieneinrichtung 100 mit der magnetorheologischen Bremseinrichtung 1 einseitig gelagert. Die zweite Bremskomponente 3 ist hier nur an dem ersten Ende der geschlossenen Kammer 110 an einem Endabschnitt 121 der ersten Bremskomponente 2 aufgenommen, d. h. die zweite Bremskomponente 3 ist lediglich an der ersten Lagerstelle 112 durch die Lagerung 30 gelagert. Bei einer Änderung des Volumens innerhalb der geschlossenen Kammer kann sich die zweite Bremskomponente 3 leicht hin und her bewegen. Hierbei ist wieder angenommen, dass die erste Bremskomponente 2 feststeht. In diesem Fall fährt ein Teil des Durchmessers 116 der ersten Bremskomponente 2 an der ersten Lagerstelle 112 aus oder ein. Das Volumen 114 der geschlossenen Kammer 110 verändert sich. Vorteilhaft ist das System innerhalb des gegebenen Bewegungsspielraums praktisch immer bei Umgebungsdruck. Eine zusätzliche Belastung der Dichtung 38 wird verhindert.

Figuren 2b und 2c zeigen verschiedene schematische Querschnitte der magnetorheologischen Bremseinrichtung 1, die bei den Gerätekomponenten 200 nach Figur 2a und auch anderen Ausführungsbeispielen einsetzbar sind.

Die innere Bremskomponente 2 ist feststehend ausgebildet und wird von der kontinuierlich drehbaren Bremskomponente 3 umgeben. Die zweite Bremskomponente 3 weist ein sich um die erste Bremskomponente herum drehbares und hohl und innen zylindrisch ausgebildetes Mantelteil 13 auf. Erkennbar ist der zwischen der ersten und der zweiten Bremskomponente 2, 3 umlaufende Spalt 5. Der Spalt 5 ist hier wenigstens zum Teil und insbesondere vollständig mit einem magnetorheologischen Medium 6 gefüllt.

Die erste Bremskomponente 2 weist den sich in der axialen Richtung 20 erstreckenden Kern 21 aus einem magnetisch leitfähigen Material und eine elektrische Spule 26 auf, die in axialer Richtung 20 um den Kern 21 gewickelt ist und eine Spulenebene 26c aufspannt. Das Magnetfeld 8 der elektrischen Spule 26 erstreckt sich quer zu der axialen Richtung 20 durch die erste Bremskomponente 2 bzw. den Kern 21.

Es ist klar erkennbar, dass ein maximaler äußerer Durchmesser 26a der elektrischen Spule 26 in einer radialen Richtung 26d innerhalb der Spulenebene 26c größer ist als ein minimaler äußerer Durchmesser 21b des Kerns 21 in einer radialen Richtung 25 quer und z. B. senkrecht zu der Spulenebene 26c.

Die Magnetfeldkonzentratoren 80 ragen radial nach außen von dem Grundkörper des Kerns 21 ab. Der Verlauf des Magnetfeldes 8 ist beispielhaft in Figur 2b eingezeichnet.

Die elektrische Spule ist außerhalb der Winkelsegmente 61 und 62 angeordnet (vgl. Figur 2c). Außerhalb der Winkelsegmente 61 und 62 befinden sich keine Magnetfeldkonzentratoren 80.

Die Kerne 21 weisen nach außen abstehende Arme 83 als Magnetfeldkonzentratoren 80 auf, die sich von dem Grundkörper 33 aus radial nach außen erstrecken. In Figuren 2b und 2c ist die Kammer 110 zwischen dem Kern 21 und dem Mantelteil 13 vollständig mit MRF gefüllt.

Der maximale äußere Durchmesser 26a der Spule 26 ist größer als der minimale Kerndurchmesser 21b. Die radiale Erstreckung des Spaltes 5 variiert über dem Umfang. An den äußeren Enden der Magnetfeldkonzentratoren 80 liegt nur ein geringe radiale Spalthöhe 85 vor, während ein radiales Spaltmaß 87 zwischen der Bremskomponente 2 und der Bremskomponente 3 an anderen Stellen erheblich größer ist.

Die radiale Spalthöhe 85 zwischen einem Außenende eines Armes 83 und einer Innenoberfläche 67 des Mantelteils 13 ist aber erheblich geringer als ein radiales Spaltmaß 87 zwischen der Außenoberfläche 86 (d.h. dem Kern 21 direkt oder auch einer Oberfläche einer Vergussmasse 28 an dem Kern) der ersten Bremskomponente 2 neben dem Arm 83 und der Innenoberfläche 67 des Mantelteils 13.

Figur 2c zeigt eine Variante von Figur 2b, bei der zur Verkleinerung des MRF-Volumens die Kammer 100 über einen zylindrischen Abschnitt mit Vergussmasse 28 gefüllt ist. Dadurch sinkt das benötigte Volumen an MRF. Die Sternkontur 40 bzw. die Magnetfeldkonzentratoren 80 ragt bzw. ragen (radial) in den Spalt 5 hinein, sodass sich in dem Bereich der Sternkontur 40 ein umlaufender Spaltbereich 40d mit veränderlicher Spalthöhe 40c ergibt. Das radiale Spaltmaß 87 (maximale Spalthöhe) wird deutlich verkleinert, bleibt aber erheblich (wenigstens Faktor 2 oder 3 oder 5 oder 10) größer als die (minimale) (radiale) Spalthöhe 85. Dadurch wird sichergestellt, dass der beschriebene Keileffekt auftritt. Die MRF-Partikel verketten sich in den spitzwinkligen Bereichen und bilden eine Art Keil, der zu einem erheblichen Bremsmoment führt. In den Figuren 2b und 2c bilden die Magnetfeldkonzentratoren 80 eine Art von radialen Armen 83.

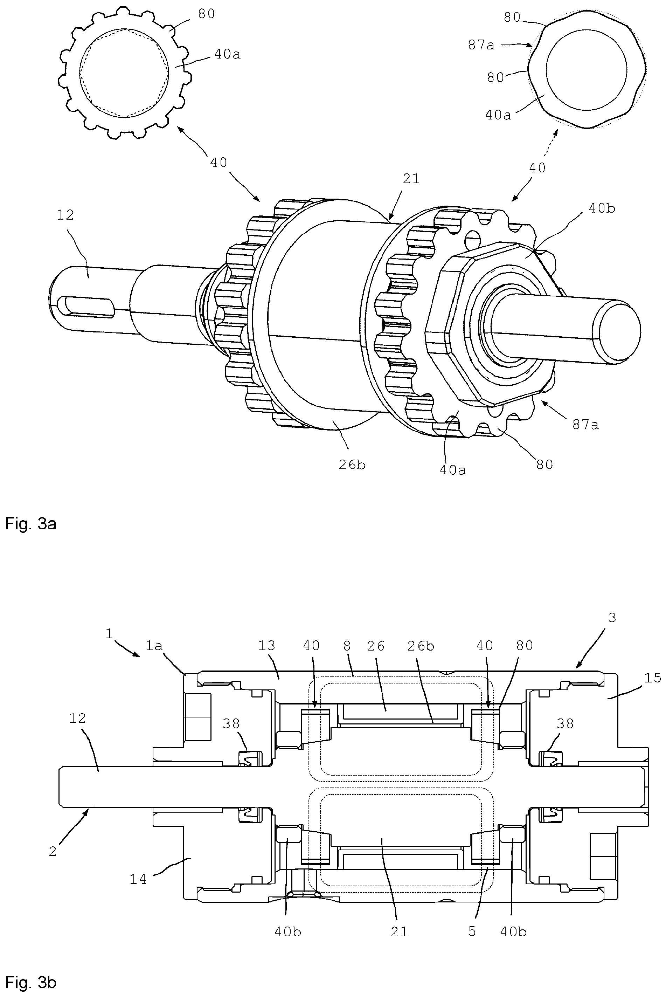

Figuren 3a und 3b zeigen eine andere magnetorheologische Bremseinrichtung 1 für eine haptische Bedieneinrichtung 100. Die magnetorheologische Bremseinrichtung 1 umfasst ein Bremsgehäuse 1a, welches hier (Fig. 3b) im Wesentlichen aus den beiden Abschlüssen bzw. Deckeln 14, 15 und dem Mantelteil 13 besteht.

Die erste Bremskomponente 2 umfasst die Achse 12, die an wenigstens einer Seite abgedichtet aus dem Bremsgehäuse 1a herausgeführt ist. Die zweite Bremskomponente 3 umfasst das Bremsgehäuse 1a. Außen an dem Bremsgehäuse 1a ist der Bedienknopf 101 aufgenommen oder ausgebildet.

Die Achse 12 kann auch eine Durchgangsöffnung und z. B. eine Längsbohrung aufweisen.

Regelmäßig ist die erste Bremskomponente 2 mit einem hier nicht sichtbaren Halter 4 an einer Konsole 50 oder an anderen Teilen oder Komponenten drehfest aufgenommen. Dann bildet wenigstens das Mantelteil 13 einen rotierbaren Teil eines Bedienknopfes 101 oder dergleichen. Das zur Drehung des Mantelteils 13 erforderliche Drehmoment ist einstellbar. Möglich ist es aber auch, dass das Bremsgehäuse 1a drehfest montiert ist und dass die Achse 12 drehbar ist.

In Fig. 3a ist die magnetorheologische Bremseinrichtung 1 ohne äußeres Bremsgehäuse 1a und ohne Mantelteil 13 dargestellt. Hier sind zwei Sternkonturen 40 umfasst, die entlang der Achse 12 in axialer Richtung 20 voneinander beabstandet an dem Kern 21 aufgenommen sind. Jede Sternkontur 40 ist als separates Teil ausgebildet und ist hier über eine separate Schraubmutter 40b auf dem Kern 21 festgeklemmt. Die Sternkontur kann innen zylindrisch oder konisch ausgestaltet sein.

Gegebenenfalls können der Kern 21 und die Sternkonturen 40 auch aneinander angepasste unrunde Außen- bzw. Innenkonturen aufweisen, um eine drehfeste Aufnahme der Sternkontur 40 an dem Kern 21 zu gewährleisten. In Fig. 3a ist oben links eine Ansicht einer Sternkontur 40 gezeigt, die innen eine Durchgangsöffnung aufweist. Die Innenkontur kann zylindrisch (durchgezogen eingezeichnet) oder auch unrund (Polygon, Mehreck, oval etc.) ausgebildet sein (gestrichelt eingezeichnet).

Radial außen an der Sternkontur 40 sind die Magnetfeldkonzentratoren 80 ausgebildet. Zwischen den einzelnen Magnetfeldkonzentratoren 80 ist jeweils eine Vertiefung 87a ausgebildet. Hier sind alle Magnetfeldkonzentratoren 80 einer Sternkontur 40 einstückig an der Sternkontur 40 ausgebildet. Drehbare Walzen oder sonstige Drehkörper sind als Magnetfeldkonzentratoren 80 und auch sonst nicht vorhanden.

Die beiden Sternkonturen 40 der magnetorheologischen Bremseinrichtung 1 nach Fig. 3a können gleich ausgebildet sein. Möglich ist es aber auch, dass am rechten und linken Ende unterschiedliche Sternkonturen 40 angeordnet sind. Insbesondere können die Magnetfeldkonzentratoren (die in allen Ausgestaltungen auch als Konturelemente bezeichnet werden können) auch an den Sternkonturen 40 rechts und links unterschiedlich ausgeformt sein (vgl. die im oberen Teil von Fig. 3a jeweils einzeln abgebildeten Sternkonturen). Möglich ist es auch, dass an einem oder jedem Ende jeweils zwei (oder drei) unterschiedliche Sternkonturen aufgenommen sind. Dabei können die Konturelemente geometrisch unterschiedlich ausgestaltet sein und zueinander unterschiedliche Abmessungen aufweisen.

Im Querschnitt nach Fig. 3b ist zu sehen, dass die Achse 12 (auch Welle genannt) über Dichtungen 38 gegenüber dem Bremsgehäuse 1a abgedichtet ist. Zwischen den beiden Sternkonturen 40 ist der Spulenhalter 26b aufgenommen, an dem die elektrische Spule 26 gewickelt ist. Die elektrische Spule 26 kann unmittelbar und direkt an das Mantelteil 13 angrenzen und ist dann magnetisch isoliert von dem Kern 21 gehalten. Oder die elektrische Spule 26 kann unmittelbar und direkt an den Kern 21 angrenzen und ist dann magnetisch isoliert von dem Mantelteil 13 gehalten.

Beispielhaft ist eine Magnetfeldlinie 8 eingezeichnet. Das Magnetfeld verläuft zwischen den Sternkonturen 40 im Wesentlichen axial durch das Mantelteil 13 und durchtritt im Bereich der beiden Sternkonturen 40 etwa radial den dortigen Spalt 5 und wird durch die Magnetfeldkonzentratoren 80 konzentriert, sodass sich im Bereich der Magnetfeldkonzentratoren 80 ein Keileffekt ergibt. Das Magnetfeld wird innerhalb des Kerns 21 in axialer Richtung 20 geschlossen.

Im Prinzip weist die magnetorheologische Bremseinrichtung 1 ein Keillager mit zwei Sternkonturen 40 auf. Im Zentrum ist eine magnetisch leitende Achse oder Welle 12, um die radial eine elektrische Spule 26 gewickelt ist. Die elektrische Spule 26 erzeugt ein Magnetfeld 8, welches durch die Welle 12 als Kern 21 verstärkt wird. Die Magnetfeldlinien 8 führen durch die Sternkontur 40 auf der einen Seite, über die magnetisch leitende Außenwand in dem Mantelteil 13 weiter zur zweiten Sternkontur 40 auf der anderen Seite, über die die Feldlinien wieder zur Achse bzw. Welle 12 schließen. So wird das Magnetfeld 8 sehr effizient ausgenutzt. Im Spalt 5 zwischen Sternkontur 40 und Außenwand (Mantelteil 13) befindet sich MRF als Dämpfmedium.

In diesem Aufbau können verschiedene Sternkonturen angebracht werden. Die Welle 12 weist dazu hier eine konische Aufnahme auf, auf welche die Ringflansche 40a mit den jeweils daran ausgebildeten (z. B. eingefrästen) Sternkonturen 40 geschoben werden. Eine Gewindemutter 40b hinter dem Ringflansch 40a presst beim Anziehen dann den Ringflansche 40a auf die Welle 12.

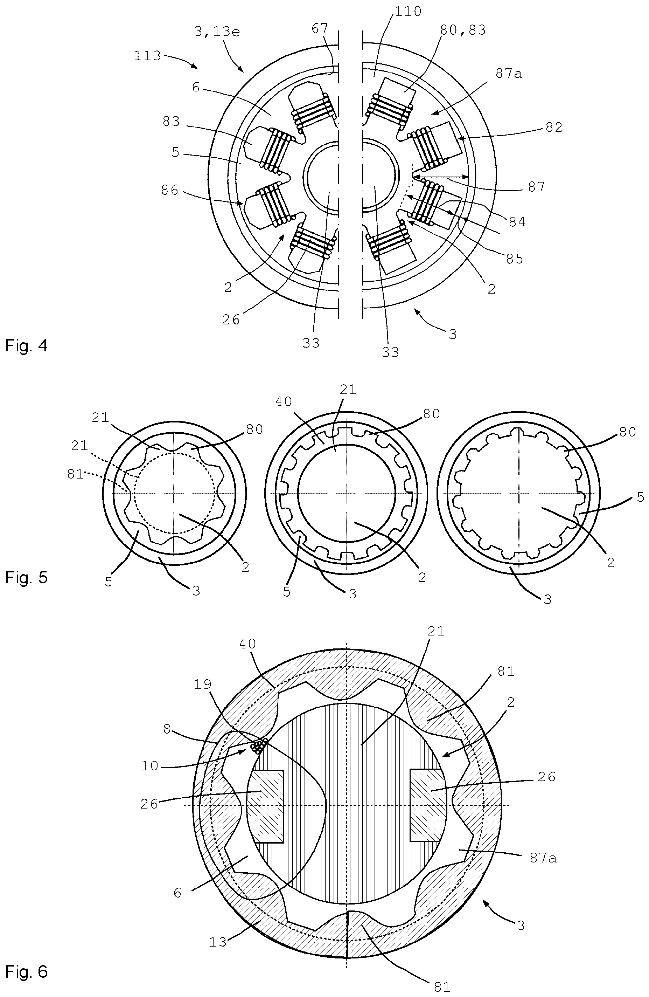

Figur 4 zeigt zwei schematische Querschnitte anderer Ausführungsformen mit einem (zylindrischen) Grundkörper 33. Die Sternkontur mit den Magnetfeldkonzentratoren 80 werden durch einzelne nach außen abstehende radiale Arme 83 ausgebildet, wobei die radialen Arme 83 einstückig mit dem Kern 21 ausgebildet sind und aus einem gut magnetisch leitenden Material bestehen.

Hier ist jeder einzelne Arm 83 von einer elektrischen Spule 26 der Magnetfelderzeugungseinrichtung 113 umwickelt. Die elektrischen Spulen 26 werden vorzugsweise gemeinsam angesteuert, können aber auch unterschiedlich und/oder einzeln angesteuert werden. Die distalen und hier radial äußeren Enden 82 der Arme 83 können keilförmig, abgerundet oder auch eckig ausgebildet sein. Bei radial nach innen abstehenden Armen 83 als Magnetfeldkonzentratoren 81 kann dementsprechend das radial innere Ende als distales Ende 82 keilförmig, abgerundet oder auch eckig ausgebildet sein. Durch die Form werden das maximal erzeugbare Moment und die Reaktionszeit beeinflusst.

Die Armhöhe 84 ist erheblich größer (Faktor 10, 50, 100 und weit mehr) als die radiale Spalthöhe 85 zwischen einem Außenende eines Armes 83 und einer Innenoberfläche 67 des Mantelteils 13.

Die radiale Spalthöhe 85 zwischen einem Außenende eines Armes 83 und einer Innenoberfläche 67 des Mantelteils 13 ist aber erheblich geringer als ein radiales Spaltmaß 87 zwischen der Außenoberfläche 86 (Kern 21 oder auch Oberfläche einer Vergussmasse 28) der ersten Bremskomponente 2 neben dem Arm 83 und der Innenoberfläche 67 des Mantelteils 13. Vorzugsweise ist das Verhältnis von dem radialen Spaltmaß 87 zu der radialen Spalthöhe 85 größer 2, 5 oder 10 oder mehr. Eine gewisse Vergrößerung ist wichtig für die Keilbildung. Die Sternkontur 40 bzw. die Magnetfeldkonzentratoren 80 ragt bzw. ragen radial in den Spalt 5 hinein, sodass sich in dem Bereich der Sternkontur 40 ein umlaufender Spaltbereich 40d mit veränderlicher Spalthöhe 40c ergibt.

In Figur 5 sind drei verschiedene Außenkonturen eines Kerns 21 an einem mit einem zylindrischen Hohlraum ausgebildeten Mantelteil 13 abgebildet. Die radial an den Sternkonturen 40 nach außen abstehenden Magnetfeldkonzentratoren 80 können unterschiedlich geformt sein. Die nach außen ragenden Magnetfeldkonzentratoren 80 bilden an dem Spalt 5 einen umlaufenden Spaltbereich 40d mit über dem Umfang veränderlicher Spalthöhe 40c, sodass das Magnetfeld 8 im Bereich der Magnetfeldkonzentratoren 80 gebündelt wird, wenn es von dem Kern 21 in das Mantelteil 13 übertritt. Die Sternkonturen 40 werden durch Ringflansche mit davon nach außen abstehenden Magnetfeldkonzentratoren 80 gebildet. Die Ringflansche sind jeweils hohl ausgebildet und können innen unrund geformt sein, um eine drehfeste Verbindung mit dem dann dort auch unrund gestalteten Kern zu gewährleisten.

Rein schematisch dargestellt ist in der linken Abbildung von Figur 5 eine gestrichelte Variante, bei der die Magnetfeldkonzentratoren 81 nach innen abstehen und innen der Kern 21 vorgesehen ist. Dann entsteht ein umgekehrtes Bild. Durch die Formung der Enden der Magnetfeldkonzentratoren 80 bzw. 81 können unterschiedliche Eigenschaften erreicht werden. So kann der Fokus auf ein höheres Bremsmoment oder eine schnelle Reaktionszeit gesetzt werden. Der Spaltbereich 40d mit variabler Spalthöhe ist in allen drei Varianten zu sehen, aber nur in der rechten Variante mit Bezugszeichen angezogen.

Figur 6 zeigt eine schematische Variante mit einem zentralen zylindrischen Kern 21 und einem Mantelteil 13, von dem periodisch radial nach innen Magnetfeldkonzentratoren 81 abstehen. Eine stark schematische Magnetfeldlinie 8 ist eingezeichnet, die radial den Spalt 5 zwischen dem Kern 21 und einem Magnetfeldkonzentrator 81 durchtritt. An der Engstelle verkettet sich in dem mit dem Medium 6 gefüllten Spalt 6 ein Haufen der Partikel 19 des MRF und bildet einen Keil (Haufen) in einem spitzwinkligen Bereich 10, der ein hohes Bremsmoment erzeugt.

Neben der dargestellten Variante, bei der die elektrische Spule in axialer Richtung um den Kern gewickelt ist, ist auch eine Variante möglich, bei der die elektrische Spule 26 radial um die Drehachse (2) herum gewickelt ist.

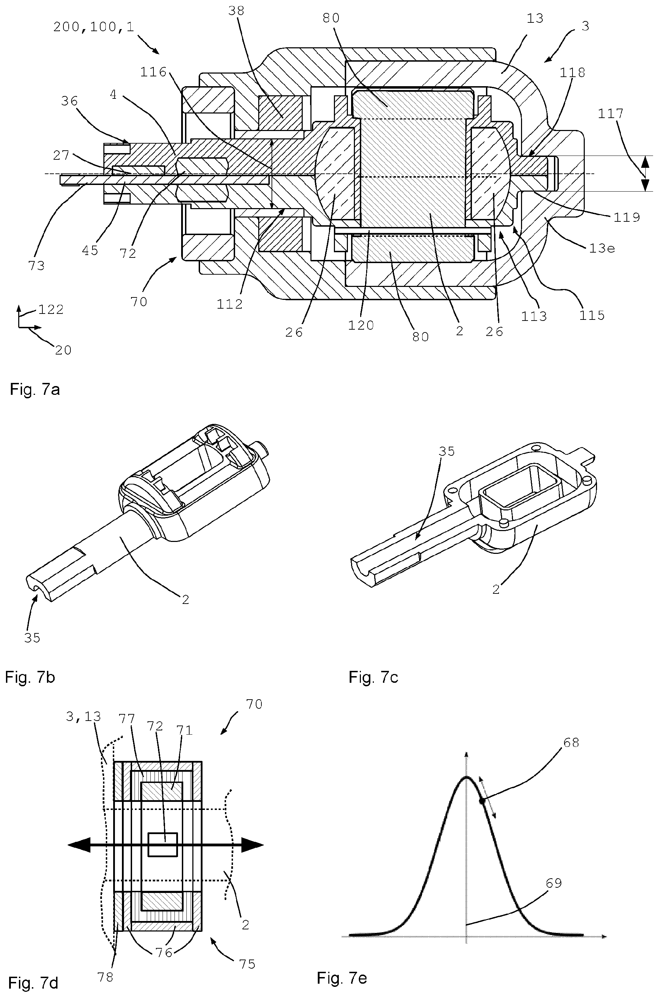

Figuren 7a bis 7e zeigen eine weitere Ausführungsform einer Gerätekomponente 200, die über eine magnetorheologische Bremseinrichtung 1 verfügt und Bremskomponenten 2 und 3 umfasst. Es wird wieder eine "liegende oder axiale Spule" verwendet, bei der die elektrische Spule 26 in axialer Richtung 20 um den Kern 21 gewickelt ist und wieder einen maximalen radialen Spulendurchmesser 26a aufweist, der größer ist als ein minimaler Kerndurchmesser 21b des Kerns 21. Auch hier sind radial nach außen abstehende Magnetfeldkonzentratoren 80 vorgesehen, die das Magnetfeld in dem dünnen radialen Spalt konzentrieren und für den Keileffekt sorgen. Es handelt sich nicht um eine konventionelle Scherdämpfung, weil sich die Spalthöhe des Spalts 5 über dem Umfang massiv ändert. Hier sind horizontale Linien eingezeichnet, die den radialen Ausgangspunkt für die Magnetfeldkonzentratoren 80 zeigen. Außerhalb der Magnetfeldkonzentratoren 80 ist die Spalthöhe sehr viel größer (hier Faktor > 50 oder 100 oder 1000).

Hier ist die Gerätekomponente 200 als haptische Bedieneinrichtung 100 und im Detail als Bedienknopf 101 ausgeführt. Die zweite Bremskomponente 3 ist an dem ersten Ende 111 der geschlossenen Kammer 110 an der Lagerstelle 112 aufgenommen. Außerdem ist die die zweite Bremskomponente 3 an der zweiten Lagerstelle 118 an dem zweiten Ende 115 der geschlossenen Kammer 110 an der ersten Bremskomponente 2 aufgenommen. Durch die Lagerung werden Kräfte in die (globale) radiale Richtung 122 aufgenommen, während die Bremskomponenten 2, 3 weiterhin relativ axial zueinander verschiebbar sind.

Hier wird die Lagerung mittels eines Achsstummels 119 mit dem Durchmesser 117 an der zweiten Lagerstelle 118 realisiert. Der Dichtring 46 hindert das magnetorheologische Medium 6 daran, in den Bereich hinter den Achsstummel 119 zu fließen.

Der Durchmesser 117 an der zweiten Lagerstelle 118 ist hier deutlich kleiner ausgeführt als der Durchmesser 116 an der ersten Lagerstelle 112. So wird auch hier bei einer axialen Verschiebung eine Volumenänderung ermöglicht. Temperaturbedingte Volumenänderungen und durch Leckagen bedingte Volumenänderungen können kompensiert werden. Hierzu erfolgt eine relative axiale Verschiebung der ersten Bremskomponente 2 zur zweiten Bremskomponente 3. Um die Drosselwirkung über den Spalt 5 bei einer axialen Verschiebung zu reduzieren, kann ein Ausgleichskanal 120 vorgesehen sein, welcher die beiden Bereiche nahe der Lagerstellen 112, 118 miteinander verbindet.

Außerdem ist auch hier eine Sensoreinrichtung 70 zur Detektion einer Winkelstellung der haptischen Bedieneinrichtung 100 vorhanden. Der Magnetfeldsensor 72 ist in der feststehenden Aufnahme 4 bzw. der ersten Bremskomponente 2 integriert. An der Aufnahme 36 ist das Kabel 45 des Magnetfeldsensors 72, d. h. die Sensorleitung 73 durch die Kabeldurchführung 35 nach außen geführt.

Das erste Achsteil bzw. der Halter 4 der Bremskomponente 2 kann, wie in Figuren 7b und 7c dargestellt, bevorzugt zweiteilig ausgeführt sein. Dadurch wird vor allem die Montage der elektrischen Leitungen und insbesondere der Sensorleitung 73 innerhalb der ersten Bremskomponente 2 vereinfacht. Die Kabel können durch die offene Kabeldurchführung 35 gelegt werden.

In Figur 7d ist die Sensoreinrichtung 70 noch einmal im Detail dargestellt. Die erste Bremskomponente 2 und die hier als Drehteil ausgeführte zweite Bremskomponente 3 sind nur angedeutet (gestrichelte Linien). Die Sensoreinrichtung 70 stützt sich über die Entkopplungseinrichtung 78 an der drehbaren zweiten Bremskomponente 3 magnetisch entkoppelt ab. Die Abschirmeinrichtung 75 besteht hier aus drei Abschirmkörpern 76, welche die Streuung des magnetischen Felds 8 der elektrischen Spule 26 vermindern. Darüber hinaus ist außerdem noch eine Trenneinheit 77 zur magnetischen Trennung vorhanden. Die Magnetringeinheit 71 wird zum Messen der Orientierung bzw. des Drehwinkels der magnetorheologischen Bremseinrichtung 1 genutzt. Der Magnetfeldsensor 72 ist innerhalb der ersten Bremskomponente 2 angeordnet. Kleine relative axiale Verschiebungen können außerdem genutzt werden, um ein Herunterdrücken beispielsweise eines Bedienknopfs 101 zu detektieren, vgl. Figur 7e.

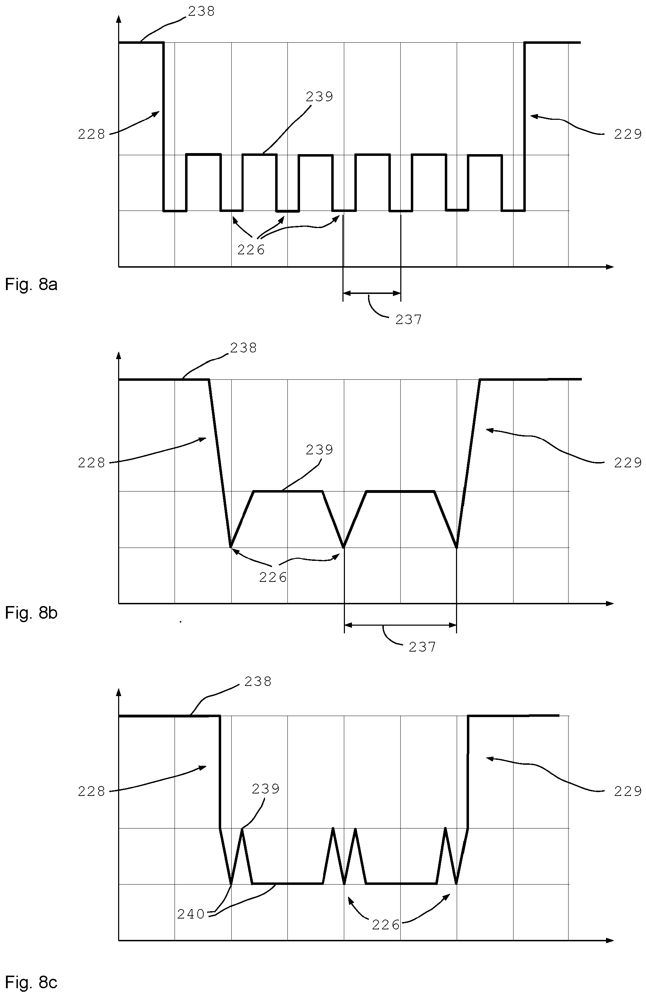

Durch eine Axialverschiebung verändert sich das empfangene Signal 68 der Sensoreinrichtung gemäß der Darstellung von Figur 8. Figur 8 zeigt den Verlauf der Amplitude 69 des durch den Magnetfeldsensor 72 detektierten Signals 68 in Abhängigkeit zur axialen Verschiebung der Bremskomponenten 2, 3 (horizontale Achse) dargestellt. Durch eine axiale Verschiebung des Magnetfeldsensors 72 gegenüber der Magnetringeinheit 71 verändert sich die Amplitude 69 des detektierten Signals 68. Eine axiale Verschiebung bzw. ein Herunterdrücken eines Bedienknopfs 101 oder eine seitliche Verschiebung z. B. eines Mausrades 106 oder anderen Komponenten kann detektiert werden.

Mit dem gleichen Sensor 72 kann auch der Drehwinkel erfasst werden, wobei zur Erfassung des Drehwinkels die Richtung des Magnetfeldes 8 ermittelt wird. Die Intensität bestimmt die axiale Position. Aus einer Veränderung des Signals 68 kann deshalb auf eine Betätigung des Tasters 74 zurückgeschlossen werden. Das ist vorteilhaft, da ein einziger (mehrdimensionaler) Hallsensor zur Bestimmung der Winkelposition und der Bestimmung einer Axialposition verwendet werden kann.

In den Figuren 8a, 8b und 8c sind mögliche Ausführungsvarianten zur Steuerung eines dynamisch erzeugten Magnetfeldes bzw. eines dynamisch erzeugten Bremsmoments in Abhängigkeit von dem Drehwinkel dargestellt.

Figur 8a zeigt dabei eine Variante, bei der ein Drehknopf als haptische Bedienhilfe eingesetzt wird. Dargestellt ist der Drehwiderstand über dem Drehwinkel. Mit der Steuerung 27 kann ein linker Endanschlag 228 und ein rechter Endanschlag 229 erzeugt werden. Beim Weiterdrehen des Drehknopfes 23 wird dort ein hohes Magnetfeld bzw. Anschlagmoment 238 erzeugt, wodurch der Drehknopf 23 einen hohen Widerstand gegenüber einer Drehbewegung entgegensetzt. Der Benutzer erhält die haptische Rückmeldung eines Endanschlags.

Dabei kann eine Rasterung der Drehbewegung erfolgen bzw. erzeugt werden (Rippel/Ticks). Beispielsweise kann dies verwendet werden, um durch ein grafisches Menü zu navigieren und Menüpunkte auszuwählen. Hier ist direkt neben dem linken Endanschlag 228 ein erster Rasterpunkt 226 vorgesehen, der bei einer Bedienung z. B. einem ersten Menüpunkt entspricht. Soll der nächste Menüpunkt angewählt werden, so muss der Drehknopf 100 im Uhrzeigersinn gedreht werden. Dazu muss das dynamisch erzeugte höhere Magnetfeld bzw. Rastmoment 239 bzw. dessen Reibmoment überwunden werden, bevor der nächste Rasterpunkt 226 erreicht wird. In Figur 8a wird für einen gewissen Winkelbereich jeweils an den Rasterpunkten 226 und an den dazwischenliegenden Bereichen ein jeweils konstantes Magnetfeld erzeugt, welches an den Rasterpunkten erheblich geringer ist als in den dazwischenliegenden Bereichen und nochmals deutlich geringer als an den Anschlägen 228, 229. An den Rasterpunkten 226 kann ein eingestelltes Moment wirken oder aber das sich konstruktiv ergebende Grundmoment 240.

Ein Winkelabstand 237 zwischen einzelnen Rasterpunkten ist dynamisch veränderbar und wird an die Anzahl der zur Verfügung stehenden Rasterpunkte bzw. Menüpunkte angepasst.

Figur 8b zeigt eine Variante, bei der zu den Endanschlägen 228, 229 hin das Magnetfeld nicht schlagartig ansteigt, sondern einen steilen Verlauf nimmt. Weiterhin sind an den Rasterpunkten 226 zu beiden Drehseiten hin jeweils rampenartige Steigungen des Magnetfeldes vorgesehen, wodurch der Drehwiderstand in die entsprechenden Drehrichtungen hin zunimmt. Hier werden mit der gleichen Bedieneinrichtung 100 nur drei Rasterpunkte 226 zur Verfügung gestellt, deren Winkelabstand 237 größer ist als in dem Beispiel gemäß Figur 8a.

Figur 8c zeigt eine Variante, bei der zwischen einzelnen Rasterpunkten 226 ein geringerer Drehwiderstand vorliegt und nur direkt benachbart zu den Rasterpunkten 226 jeweils ein erhöhtes Magnetfeld 239 erzeugt wird, um ein Einrasten an den einzelnen Rasterpunkten 226 zu ermöglichen und gleichzeitig nur einen geringen Drehwiderstand zwischen einzelnen Rasterpunkten zur Verfügung zu stellen.

Grundsätzlich ist auch eine Mischung der Betriebsweisen und der Magnetfeldverläufe der Figuren 8a, 8b und 8c möglich. Z. B. kann bei unterschiedlichen Untermenüs eine entsprechend unterschiedliche Einstellung des Magnetfeldverlaufes erfolgen (Drehmoment über Winkel).

Möglich ist es in allen Fällen auch, dass bei z. B. einem Ripple (Raster) nicht wie bislang zwischen wenig und mehr Stromstärke mit gleicher Polung geschaltet wird (also z. B. +0,2 auf +0,8A = Rippel), sondern abwechslungsweise mit verändertet Polung, d. h. von +0,2 auf +0,8A und dann den nächsten Rippel mit -0,2A auf - 0,8A und dann die nächste Momentenspitze von +0,2 auf +0,8A usw.

Möglich ist in allen Fällen auch, dass die Betriebsweisen der Figuren 8a, 8b und 8c oder eine Mischung der Betriebsweisen durch Sprachbefehle ausgewählt werden. Der Benutzer wählt per Spracheingabe (mit lokaler oder entfernter Spracherkennung, z.B. über Alexa, Amazon Echo, Siri, Google Spracheingabe...) eine Funktion (Lautstärke, Senderwahl...) aus. Die magnetorheologische Bremseinrichtung stellt dann einen entsprechende Betriebsweise zur Verfügung (Lautstärke = Raster mit zunehmendem Bremsmoment für zunehmende Lautstärke; Radiosenderauswahl = Raster mit verschiedener Schrittweite, dazwischen geringes Bremsmoment, bis Sender gefunden wird).

Der vorzugsweise niederlegierte Stahl kann ein Restmagnetfeld behalten. Der Stahl wird vorzugsweise regelmäßig oder bei Bedarf entmagnetisiert (u.a. durch ein spezielles Wechselfeld).

Bevorzugt wird für die vom Magnetfeld durchflossenen Komponenten der Werkstoff FeSi3P (Siliziumstahl bzw. Silicon Steel) oder ein artverwandter Werkstoffe verwendet.

In allen Fällen kann eine Sprach- oder Geräuschsteuerung durchgeführt werden. Mit der Sprachsteuerung kann die Bremseinrichtung adaptiv gesteuert werden.

Wenn die Dreheinheit nicht gedreht wird, d. h. der Winkel ist konstant, wird vorzugsweise über die Zeit der Strom kontinuierlich verringert. Der Strom kann auch geschwindigkeitsabhängig (Drehwinkelgeschwindigkeit der Dreheinheit) variiert werden.

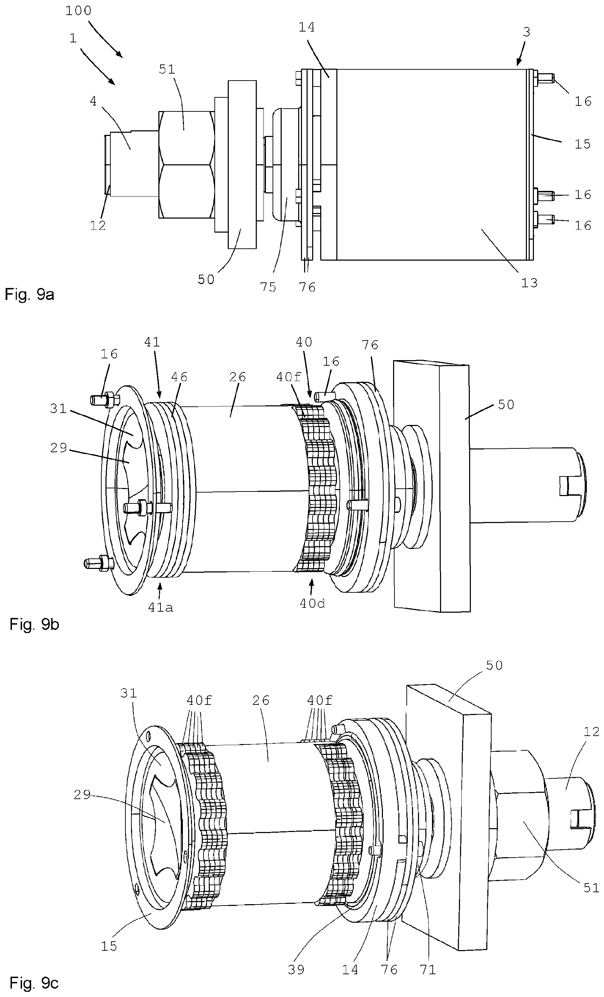

Die Figuren 9a bis 9e zeigen verschiedene Ansichten einer haptischen Bedieneinrichtung 100 mit einer magnetorheologischen Bremseinrichtung 1, die als Bedienknopf 101 eingesetzt werden kann. Die haptische Bedieneinrichtung 100 umfasst einen Halter 4, der über eine Mutter 51 beispielsweise an einer Konsole 50 befestigt werden kann.

Die magnetorheologische Bremseinrichtung 1 weist zwei Bremskomponenten 2, 3 auf, von denen die hier innere Bremskomponente 2 in Figur 9a nicht sichtbar ist. Die innere Bremskomponente 2 ist mit dem Halter 4 verbunden. Der Halter 4 und die innere Bremskomponente 2 sind hier feststehend ausgebildet. Die andere Bremskomponente 3 umfasst das Mantelteil 13 und ist rotierbar an der ersten Bremskomponente 2 aufgenommen.

Die haptische Bedieneinrichtung 100 ist kompakt aufgebaut und verfügt im Inneren der Abschirmeinrichtung 75, die über einen hier zweiteiligen Abschirmkörper 76 als Abschirmgehäuse verfügt, über eine hier nicht erkennbare Sensoreinrichtung 70 zur Erfassung der Drehposition und der Axialposition des Mantelteils 13. Über Stifte 16 ist das Mantelteil 13 mit einem linken Deckel 14 und einem rechten Deckel 15 verbunden, um eine innere geschlossene Kammer 110 abzudichten.

Figur 9b zeigt eine mögliche Variante mit abgenommenem Mantelteil 13. Die Spule 26 verdeckt hier den darunter liegenden Kern 21. Am distalen und hier linken Ende ist eine Scheibenkontur 41 an dem Kern 21 aufgenommen. An dem proximalen und hier rechten Ende ist eine Sternkontur aufgenommen.

An der Sternkontur bzw. durch die Sternkontur 40 wird zwischen Sternkontur 40 und Mantelteil 13 ein Spaltbereich 40d (als Bremsbereich) definiert bzw. gebildet, in dem umlaufend eine variable Spalthöhe 40c vorliegt.

An der Scheibenkontur 41 am distalen Ende bzw. durch die Scheibenkontur 41 wird zwischen Scheibenkontur 41 und Mantelteil 13 ein Spaltabschnitt 41a (als Bremsbereich) definiert bzw. gebildet, in dem umlaufend eine konstante Spalthöhe 41b vorliegt.

Der Spaltbereich 40d und der Spaltabschnitt 41a bilden die Bremsbereiche der magnetorheologischen Bremseinrichtung. Das Magnetfeld der elektrischen Spule 26 verläuft innen axial durch den Kern 21 und außen axial durch das Mantelteil 13 und an den Bremsbereichen radial von der Sternkontur 40 in das Mantelteil bzw. von der Scheibenkontur in das Mantelteil.

Durch die gemischte "Hybridlösung" können beim Anlaufen und auch bei hohen Drehzahlen Bremsmomentvorteile genutzt werden.

Das hier in Figuren 9b und 9c nicht dargestellte Mantelteil wird über Stifte oder ähnliche Befestigungsmittel oder dergleichen mit den Deckeln 14, 15 verbunden. Als Dichtungen können O-Ringe 39 oder dergleichen vorgesehen sein.

In der Darstellung nach Figur 9c sind zwei Sternkonturen an den Enden des Kerns axial aufgenommen. Das erlaubt hohe Maximaldrehmomente.

Sowohl in Figur 9b als auch in Figur 9c sind die Sternkonturen und auch die Scheibenkontur jeweils als Stapelpaket 44 ausgebildet. Ein Stapelpaket 44 für eine Sternkontur umfasst mehrere Sternbleche 40f, die aneinander gereiht werden, um die Dicke anzupassen. Die einzelnen Sternbleche sind insbesondere Stanzteile, die kostengünstig hergestellt werden können.

Ein Stapelpaket 44 für eine Scheibenkontur 41 umfasst mehrere Scheibenbleche 46, die vorzugsweise ebenfalls als Stanzteile ausgebildet sind und auch aneinander gereiht werden, um die Dicke anzupassen. Stapelpakete 44 können auch gemischte Bleche umfassen, z. B. (gruppenweise oder einzeln) abwechselnd Sternbleche und Scheibenbleche 46. Auch ein solches gemischt gebildetes Stapelpaket 44 bildet insgesamt eine Sternkontur.

Die haptische Bedieneinrichtung 100 umfasst eine hier nicht sichtbare Sensoreinrichtung 70, die durch die Abschirmeinrichtung 75 mit dem als Gehäuse ausgebildeten Abschirmkörper 76 abgeschirmt wird. Im Inneren der Abschirmeinrichtung 75 ist eine Magnetringeinheit 71 angeordnet, deren Signal die Sensoreinrichtung 70 erfasst.

Seitlich sind am distalen Ende eine Membran 31 und ein Klickelement 29 zu erkennen. Das Klickelement 29 kann z. B. als Schnappscheibe ausgebildet sein und zum axialen Betätigen dienen. Bei Betätigung erzeugt die Schnappscheibe ein Geräusch. Das Betätigen ist fühlbar.

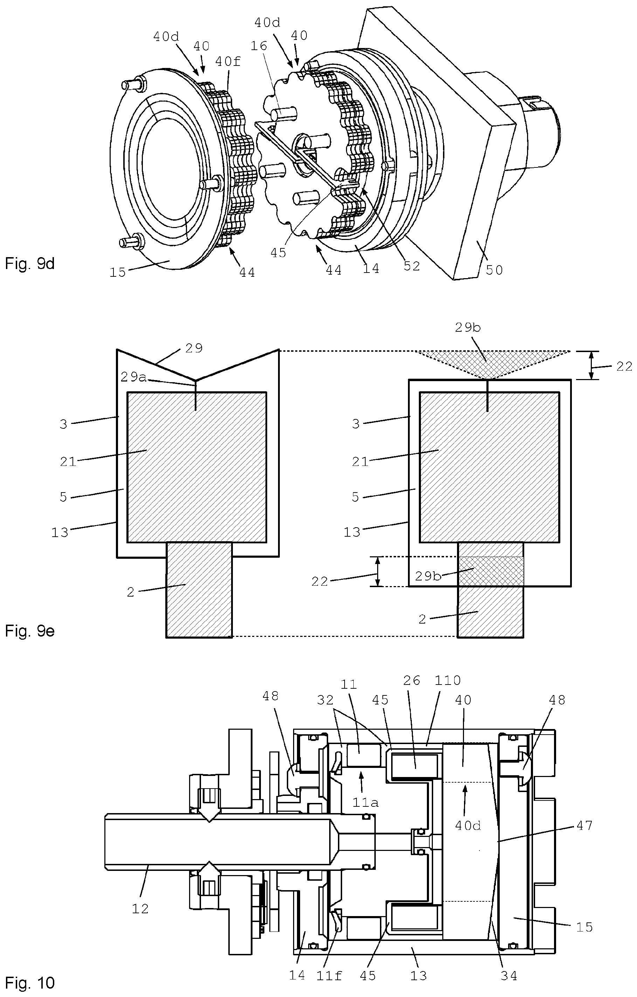

Figur 9d zeigt die haptische Bedieneinrichtung 100 aus Figur 9c, wobei der Kern entfernt wurde. Der Kern wird axial mit den Sternkonturen (oder wahlweise) Scheibenkonturen oder gemischten Stapelpaketen verbunden und über Stifte 16 oder dergleichen damit z. B. axial verpresst. Möglich ist es auch, dass die Sternkonturen und Scheibenkonturen auf den Kern aufgesteckt werden.

Diese Art der Sternkonturen 40 ermöglicht eine einfache Kontaktierung der elektrische Spule. Da die Sternkontur 40 nicht mitdreht, kann das Kabel 45 zur Kontaktierung radial im äußeren Bereich auf radialer Höhe der elektrischen Spule 26 an einer radialen Aussparung 52 oder einem Durchgangsloch zugeführt werden. Das erlaubt eine bequeme Kontaktierung der elektrischen Spule 26.

Figur 9e zeigt stark schematisch die haptische Bedieneinrichtung mit einer Schnappscheibe 29 in zwei unterschiedlichen Positionen, wobei links die unbetätigte und rechts die betätigte Position abgebildet ist. In der linken Darstellung ist die Schnappscheibe nach außen und hier nach unten gewölbt und wird hier durch die Führung 29a in dem Kern 21 geführt (aber nicht gelagert, deshalb nahezu keine Reibung).

Das Volumen des aufgespannten Dreiecks 29b ist in der rechten Hälfte der Abbildung 9e zu erkennen. Das Volumen 29b ergibt sich etwa durch den schraffierten dreidimensionalen Konus. Wird der haptische Bedienknopf 100 betätigt und die Schnappscheibe 29 von der Ruheposition ausgelenkt und in eine lineare Position innerhalb einer Ebene überführt, so verschiebt sich das Mantelteil 13 gegenüber der ersten Bremskomponente 2 hier axial nach unten. Dadurch taucht ein axialer Abschnitt 22 der Achse bzw. der ersten Bremskomponente 2 in das Innere innerhalb des Mantelteils 13 ein. Die Volumenänderung 29b der Schnappscheibe 29 wird vorzugsweise so bemessen, dass sie im Wesentlichen dem eingetauchten Volumen der ersten Bremskomponente 2 entspricht. Das eintauchende Volumen berechnet sich aus dem axialen Weg 22 multipliziert mit der Querschnittsfläche der ersten Bremskomponente 2 an der Achse 12. Über eine weitgehende Annäherung der Fläche 29b daran kann ein Druckaufbau im Inneren der Kammer 110 minimiert oder verhindert werden. Ein Volumenausgleich kann auch durch eine Membran 31 bereitgestellt werden, wie sie in Figuren 9b und 9c zu erkennen ist.

Figur 10 zeigt einen schematischen Querschnitt einer weiteren haptischen Bedieneinrichtung 100, wobei die erste Bremskomponente 2 an einem Halter 4 beispielsweise mit Madenschrauben fixiert ist. Auch bei dieser Ausgestaltung sind zwei Bremsbereiche vorgesehen, wobei an dem Spaltbereich 40d eine Sternkontur 40 ausgebildet ist. An dem Bremsspaltabschnitt 11a sind Wälzkörper 11 bzw. Drehkörper auf dem Umfang des Kerns 21 aufgenommen und können vollständig um den Kern 21 umlaufen. Die Wälzkörper 11 werden über Halterungen 11f geführt.

Die Sternkontur 40 weist hier am axial äußeren Ende eine nach außen abstehende Außenkontur 47 auf, die hier beispielsweise als Konus ausgebildet ist, aber auch als Zapfen ausgebildet sein kann. Dadurch bleibt in den Eckenbereichen jeweils ein Reservoir 34 für magnetorheologische Partikel übrig, um eine ausreichende Versorgung der Bremsbereiche mit magnetorheologischen Partikeln zu gewährleisten. Insbesondere werden Carbonyleisenpartikel aus der Umgebung angezogen und im Magnetfeldübergangsbereich konzentriert.

Schrauben 48 dienen zur Befüllung bzw. zu Entleerung der Kammer 110.

In den Figuren 11a bis 11c sind mögliche Querschnitte einer haptischen Bedieneinrichtung 100 abgebildet. Dabei verfügt die haptische Bedieneinrichtung 100 über eine magnetorheologische Bremseinrichtung 1. An dem Halter 4 ist die Bremskomponente 2 aufgenommen, die sich in axialer Richtung erstreckt und an der der Kern 21 befestigt ist. Die Bremskomponente 2 umfasst einen Schaft bzw. eine Achse 12, an der der Kern 21 befestigt ist. Der Kern 21 besteht aus einem magnetisch leitenden Material und die Achse hier aus einem magnetisch nichtleitenden Material, damit der Magnetfeldsensor 72 im Inneren der Achse 12 das Magnetfeld und dessen Ausrichtung im Inneren der Achse 12 erfassen kann.

Radial umgeben wird der Kern 21 von dem Mantelteil 13 als äußerer oder zweiter Bremskomponente 3.

Der magnetisch leitende Kern 21 ist von einer elektrischen Spule 26 umgeben, die um den Kern 21 herumgewickelt ist. Die elektrische Spule erstreckt sich über eine axiale Breite 26e. An dem dem Halter 4 zugewandten Ende des Kerns 21 ist eine Sternkontur 40 ausgebildet, die hier auf den Kern 21 aufgebracht und z. B. aufgepresst oder axial daran befestigt ist. Die Sternkontur 40 weist hierzu ein hohlzylindrisch ausgebildetes Stapelpaket 44 auf. Die Aufnahme an dem Kern kann auch unrund ausgebildet sein. Das Stapelpaket 44 kann auch axial mit dem Kern 21 verbunden sein.

Das Scheibenpaket 44 besteht aus einer Mehrzahl von dünnen Sternblechen 40f. Hier sind die Sternbleche 40f jeweils als Stanzteil ausgebildet und können zum Beispiel aus einem magnetisch leitenden Blech von 1 mm oder 2 mm oder auch 3 mm oder 4 mm Dicke (oder etwas mehr oder weniger oder etwas dazwischen) ausgestanzt werden. So kann einfach und kostengünstig die benötigte Anzahl von Sternblechen ausgestanzt werden, um die gewünschte Dicke der Sternkontur 40 zu erzeugen.

Die einzelnen Sternbleche 40f werden miteinander verpresst und auf den Kern 21 aufgebracht oder damit zum Beispiel verschraubt oder verpresst. Es verbleibt ein Spaltbereich 40d im Bereich der Sternkontur 40 mit einer variablen Spalthöhe 40c zwischen dem Außendurchmesser der Sternkontur 40 und dem Innenumfang des Mantelteils 13. Die axiale Breite 40d der Sternkontur 40 wird hier durch die Anzahl der Sternbleche 40f bestimmt und kann größer oder auch kleiner als dargestellt gewählt werden.

Die Sternkontur 40 grenzt hier axial unmittelbar an die elektrische Spule 26 an, die in einem Spulenhalter 26b aufgenommen ist und radial nach außen durch eine Vergussmasse 28 vollständig abgedichtet ist.

Die Sternkontur 40 ist mit dem Kern 21 und mit der feststehenden Bremskomponente 2 verbunden und dreht sich im Betrieb nicht. Das ermöglicht die Bildung einer Loches oder einer Aussparung 52 zur Durchführung der Kabel 45 zum elektrischen Anschluss der elektrischen Spule 26. Die elektrische Spule 26 kann dadurch einfach kostengünstig und schnell angeschlossen werden.

Die Sternkontur 40 ist hier am proximalen Ende, also an dem Ende des Kerns 21, der dem Halter 4 zugewandt ist, ausgebildet. An dem distalen Ende, also an dem anderen Ende des Kerns 21, ist ein Wälzkörperabschnitt 11a ausgebildet. Der Wälzkörperabschnitt 11a erstreckt sich über die axiale Breite der Wälzkörper 11. Dort sind auf dem Umfang des Kerns 21 die Wälzkörper 11 verteilt angeordnet. Die Wälzkörper 11 bilden Magnetfeldkonzentratoren 80 zur lokalen Verstärkung des Magnetfeldes beim Durchtritt durch den Wälzkörperabschnitt 11a.

Durch den Wälzkörperabschnitt 11a kann ein sehr hohes Bremsmoment insbesondere bei niedrigen Drehzahlen des Mantelteils 13 erreicht werden. Durch den Spaltbereich 40d im Bereich der Sternkontur 40 kann ein starkes Magnetfeld von dem Kern 21 in das Mantelteil 13 übertragen werden, da die minimale Spalthöhe erheblich geringer ist als der radiale Freiraum 11c im Bereich des Wälzkörperabschnitts 11a beträgt. Dadurch wird ein hohes Drehmoment erzeugbar, welches insbesondere auch bei höheren Drehzahlen ermöglicht wird. Dadurch kann über den gesamten Drehzahlbereich ein hohes Drehmoment zur Verfügung gestellt werden.

Die axialen Breite des Wälzkörperabschnitts 11a und die Breite des Spaltbereichs 40d der Sternkontur 40 sind hier etwa gleich (+/-25 %) und zusammen etwas kürzer als die elektrische Spule 26. Insgesamt wird ein sehr kompakter Aufbau erreicht.

Das Mantelteil 13 ist in Figur 11a von einem Überzug 49 als Drehknopf 23 umgeben. Der Drehknopf 23 ist wenigstens zum Teil transparent ausgebildet, um durch die Leuchtmittel 18 in Form von zum Beispiel LEDs beleuchtet werden zu können. Die Beleuchtung kann dabei situationsabhängig oder auch situationsunabhängig gesteuert werden.

Am vorderen Ende wird die geschlossene Kammer 110 im Inneren des Mantelteils 13 durch einen vorderen Deckel 14 abgeschlossen, durch den die Bremskomponente 2 durchgeführt wird. Eine Dichtung 38 dient zur Abdichtung. Am hinteren oder distalen Ende wird die Kammer 110 zunächst durch eine elastische Membran 31 begrenzt, an die sich nach außen ein hier als Schnappscheibe ausgebildetes Klickelement 29 anschließt.

Durch axiale Betätigung des Drehknopfes 23 wird die Schnappscheibe bzw. das Klickelement betätigt und das Mantelteil 13 wird insgesamt etwas nach links bewegt. Diese Axialbewegung kann durch die Sensoreinrichtung 70 mit dem Magnetfeldsensor 72 im Inneren des Halters bzw. der ersten Bremskomponente 2 erfasst werden, die radial von einer Magnetringeinheit 71 umgeben ist. Der Magnetfeldsensor 72 ist insbesondere als Hall-Sensor 72 ausgeführt und detektiert die Ausrichtung des radialen Magnetfeldes relativ zu dem Magnetfeldsensor 72. Darüber kann eine Winkelstellung des Mantelteils 13 relativ zu dem Kern 21 erfasst werden. Eine axiale Verstellung des Mantelteils 13 durch Betätigung des Klickelements 29 führt zu einem relativen Axialversatz zwischen der Magnetringeinheit 71 und dem Magnetfeldsensor 72, was eine Intensitätsveränderung des detektierten Signals bedingt. Darüber kann eine Betätigung des Klickelements erfasst werden.

Figur 11b zeigt eine leicht andere Darstellung einer haptischen Bedieneinrichtung 100 mit einer magnetorheologischen Bremseinrichtung, wobei hier im Unterschied zu Figur 11a der Überzug 49 bzw. der Drehknopf 23 weggelassen wurde.

Ein wesentlicher Unterschied zwischen den Figuren 11a und 11b besteht darin, dass in Figur 11b am distalen Ende des Mantelteils 13 ein Spaltabschnitt 41a mit einer Scheibenkontur 41 vorgesehen ist. An dem proximalen Ende des Mantelteils 13 ist weiterhin eine Sternkontur 40 ausgebildet. Die Scheibenkontur ermöglicht im Stand und bei hohen Drehzahlen höhere Bremsmomente.

Bei dieser Ausgestaltung kann beispielsweise außerhalb der Kammer 110 zwischen der Dichtung 38 und der Sensoreinrichtung 70 noch ein Lager zur Lagerung des Mantelteils 13 gegenüber der Bremskomponente 2 vorgesehen sein. Möglich ist es aber hier auch, dass die Lagerung an einem Ende nur über die Dichtung 38 und die Sternkontur 40 und am anderen distalen Ende nur über die Scheibenkontur 41 erfolgt.

Beispielhaft eingezeichnet sind in Figur 11b einige Magnetfeldlinien 8, die den weitgehend axialen Verlauf der Magnetfeldlinien in dem Kern 21 und in dem Mantelteil 13 zeigen. Weiterhin ist auch zu erkennen, dass in den Bremsbereichen an dem Spaltbereich 40d und dem Spaltabschnitt 41a jeweils ein (in etwa) radialer Durchtritt der Magnetfeldlinien 8 erfolgt.

Der Magnetfeldsensor 72 ist auf einer Sensorplatine 79 angebracht und kann über die Kontaktpins 79a kontaktiert werden. Darüber wird auch die elektrische Spule 26 mit Strom versorgt.

Wenigstens in dem Bereich der Sensoreinrichtung 70 und des Magnetfeldsensors 72 ist die innere Bremskomponente 2 vorzugsweise aus einem wenig oder nicht magnetisch leitenden Material ausgebildet, um eine möglichst ungestörte Detektion der Orientierung und der Intensität des Magnetfeldes der Magnetringeinheit 71 im Inneren der Achse 12 bzw. der ersten Bremskomponente 2 zu gewährleisten. Dort ist die Sensoreinrichtung 70 besonders geschützt aufgenommen (Schutz vor Wasser und Staub).

In Figur 11b ist ein O-Ring 39 zu erkennen, der den Deckel 14 gegenüber dem Mantelteil 13 abdichtet.

Figur 11c zeigt grundsätzlich einen schematischen Querschnitt des Wälzkörperabschnitts 11a. Im Inneren ist der Kern 21 zu sehen, auf dem ringsherum die Wälzkörper 11 schematisch angeordnet sind. Die Wälzkörper werden insgesamt wiederum von dem Mantelteil 13 umgeben. Die Wälzkörper weisen jeweils einen Durchmesser 11d auf. Eine radiale Spalthöhe 11b ist etwas größer als der Durchmesser 11d. Es ergibt sich ein radialer Freiraum 11c als Differenz der Spalthöhe 11b und des Durchmessers 11d. Der radiale Freiraum 11c teilt sich in der Regel radial innen und radial außen relativ gleichmäßig auf.

In der Kammer 110 ist ein magnetorheologisches Medium aufgenommen, welches magnetorheologische Partikel 19 umfasst. In der Kammer 110 ist zwischen den Bremskomponenten 2 und 3 ein Spalt 5 vorgesehen. Die Kammer 110 ist hier wenigstens teilweise mit einem magnetorheologischen Medium 6 gefüllt. Das Medium ist hier vorzugsweise ein magnetorheologisches Fluid, welches beispielsweise als Trägerflüssigkeit ein Öl umfasst, in dem ferromagnetische Partikel 19 vorhanden sind. Glykol, Fett, Wasser und dickflüssige Stoffe können auch als Trägermedium verwendet werden, ohne darauf beschränkt zu sein. Das Trägermedium kann auch gasförmig sein bzw. es kann auf das Trägermedium verzichtet werden (Vakuum). In diesem Fall werden lediglich durch das Magnetfeld beeinflussbare Partikel 19 in die Kammer 110 gefüllt.

Die ferromagnetischen Partikel 19 sind vorzugsweise Carbonyleisenpulver, wobei die Größenverteilung der Partikel vom konkreten Einsatzfall abhängt. Konkret bevorzugt ist eine Verteilung der Partikelgröße zwischen ein und zehn Mikrometern, wobei aber auch größere Partikel von zwanzig, dreißig, vierzig und fünfzig Mikrometer möglich sind. Je nach Anwendungsfall kann die Partikelgröße auch deutlich größer werden und sogar in den Millimeterbereich vordringen (Partikelkugeln). Die Partikel können auch eine spezielle Beschichtung/Mantel (Titanbeschichtung, Keramik-, Karbonmantel etc.) aufweisen, damit sie die je nach Anwendungsfall auftretenden hohen Druckbelastungen besser aushalten. Die magnetorheologischen Partikel können für diesen Anwendungsfall nicht nur aus Carbonyleisenpulver (Reineisen), sondern z. B. auch aus speziellem Eisen (härterem Stahl) hergestellt werden.

Es ist möglich, dass lediglich durch das Magnetfeld beeinflussbare Partikel in den Spalt 5 bzw. die Kammer 110 gefüllt werden, wobei gegebenenfalls Luft oder ein Inertgas zugegeben wird. Wenn z. B. nur Luft oder auch ein anderes Gas verwendet wird, können verschiedene Feststoffe dazu gemischt werden, um gewisse Eigenschaften zu verbessern. Z. B. kann Graphitpulver beigemischt werden, um die Reibung zwischen den Carbonyleisenpartikeln zu verringern, da Graphit eine schmierende Wirkung zeigt. Die Partikel können insbesondere mit PTFE beschichtet werden. Eine Beschichtung mit PTFE oder eine vergleichbare Beschichtung verhindert insbesondere, dass die Partikel verklumpen und größere Haufen bilden. Solche größeren Haufen zerfallen nicht leicht oder unter Umständen gar nicht mehr. Alternativ können auch die Scheibenkörper oder Walzkörper mit PTFE beschichtet werden, damit die Reibung verringert wird. Bei Verwendung von MRF ohne Öl oder anderes Flüssiges als Trägermedium muss sichergestellt werden, dass kein Wasser in der Bremskammer (MR-Raum oder MRF-Raum) kondensiert. Z. B. kann Kieselsäuregel (bekannt als Silikagel) oder ein anderes Trocknungsmittel dazu gemischt werden, welches Wasser absorbiert und so seiner Umgebung Feuchtigkeit entzieht

Die magnetorheologischen Partikel 19 verketten sich bei angelegtem Magnetfeld, wie in Figur 11c sehr schematisch abgebildet. Dadurch tritt ein Keileffekt auf, der bei geringen und mittleren Drehzahlen zu einer erheblichen Verstärkung des Bremsmomentes führt.

Zur näheren Erläuterung dieses Effekts wird auf die Figur 4 der internationalen Anmeldung WO 2018/215350 A1 der Anmelderin verwiesen, die bezüglich der Erklärung des Effekts in angepasster Weise vollständig in den Offenbarungsumfang dieser Anmeldung aufgenommen wird.

Figur 12 zeigt in schematischer Darstellung zwei erzeugte Bremsmomentverläufe, wobei das erzeugte Bremsmoment (normiert und deshalb hier dimensionslos - Y-Achse) über der elektrisch eingebrachten Leistung (normiert und deshalb hier dimensionslos - X-Achse) aufgetragen ist. Links ist der Verlauf für einen BLDC-Motor ("brushless direct current-Motor") und rechts der Verlauf für eine magnetorheologische Bremseinrichtung abgebildet. Es ist erkennbar, dass für das gleiche Bremsmoment der elektrische Motor erheblich mehr Leistung benötigt als die magnetorheologische Bremseinrichtung. Für ein Bremsmoment von "14" benötigt der elektrische Motor mehr als "130" normierte Leistung, während die magnetorheologische Bremseinrichtung (deutlich) eine Leistung von weniger als "0,3" benötigt. Das Verhältnis der Leistungsaufnahmen ist größer als 100:1 und liegt hier bei etwa 500:1.

Magnetorheologische Kupplungseinrichtungen und Bremsen haben u.a. den Vorteil, dass sie zum Kuppeln bzw. zur Dämpfung von Bewegungen nur wenig Strom benötigen, leise sind, wenig Wärme erzeugen und sehr schnell reagieren (~ms) etc. Der geringe Strombedarf ist besonders vorteilhaft bei batteriebetriebenen Komponenten wie z. B. Elektrofahrzeugen, bei denen sich der Stromverbrauch aller Komponenten automatisch stark in der Reichweite der Fahrzeuge niederschlägt. Aber auch bei Fahrzeugen mit Verbrennungsmotor oder elektrischen Geräten im Allgemeinen ist der Stromverbrauch ein Thema.

Figur 13 zeigt die sich ergebenden Bremsmomentverläufe einer magnetorheologischen Bremseinrichtung 1 für zwei unterschiedliche Stromstärkenverläufe (Y-Achse) über der Zeit (X-Achse). Dabei stellt die gestrichelte Kurve in der oberen Hälfte der Abbildung den konventionellen Verlauf dar, bei dem die Stromstärke direkt auf die angestrebte Stromstärke erhöht wird.

Hier wird z.B. zum Zeitpunkt 0,1 Sekunden die Stromstärke von 0 Ampere auf 2 Ampere erhöht. Der resultierende Verlauf des Bremsmomentes bzw. der Kopplungsintensität ist in der unteren Hälfte von Figur 13 gestrichelt dargestellt. Das übertragbare Bremsmoment erhöht sich bei der gestrichelten Kurve von dem Startzeitpunkt bei 0,1 Sekunden innerhalb von etwa 25 Millisekunden (Zeitpunkt 0,125 Sekunden) auf einen abgelesenen Wert von etwa 1,25 (normiert auf z.B. eine mittleeren Wert oder eine Normeinheit) und erreicht nach etwa 75 Millisekunden (Zeitpunkt 0,175 Sekunden) asymptotisch (nahezu) den eingestellten Grenzwert von etwa 1,5.

Wird hingegen zu Beginn des Kupplungs- bzw. dem Start des Brems- oder Dämpfungsvorgangs die Stromstärke dreifach auf z. B. hier 6 Ampere erhöht, wie es die durchgezogenen Linien zeigen, erhöht sich das Bremsmoment erheblich stärker und erreicht schon nach etwa 10 Millisekunden den Endwert von 1,5. Dabei wird der "Stromboost" mit erhöhter Stromstärke hier nur für etwa 10 ms aktiviert. Danach wird, wie die obere durchgezogene Kurve zeigt, die Stromstärke auf 2 Ampere reduziert. Über die kurzzeitige Erhöhung der Stromstärke ("Stromboost") kann eine deutliche schnellere Einstellung (zur Verfügung Stellung) des Kupplungs-, Dämpf- oder Bremsmomentes erfolgen. Das ist in mehrerlei Hinsicht sehr vorteilhaft, da ein schnelles Stehenbleiben und ein direkteres haptisches Gefühl (Feedback) erfahrbar ist. In der Realität merkt man den Unterschied zwischen den zwei Kurven sehr stark.

Figur 14 zeigt schematisch eine Schaltung zur schnellen Ansteuerung der elektrischen Spule 26. Die elektrische Spule 26 (Magnetspule) kann hier z. B. durch eine H-Schaltung angesteuert werden. Diese ist hier nur durch Schalter angedeutet. Eine im Normalbetrieb bzw. im Dauerbetrieb eingesetzte Spannungsquelle 35a mit geringerer Spannung von z. B. 12V (oder auch 3V oder 6V; je nach Anwendungsfall eine geeignete Spannung) liefert die Spannung für den normalen Betrieb. Für die Spannungsspitzen wird über einen Schalter eine Spannungsquelle 35b mit höherer Spannung von z.B. 18V oder 24V (oder z. B. 6V oder 12V) dazu geschaltet. Dann wird die Spannungsquelle 35a mit niedrigerer Spannung zeitweise getrennt. Nach dem Erreichen des maximalen Stroms wird die Spannungsquelle 35b mit höherer Spannung wieder von der Schaltung und der elektrischen Spule 26 getrennt und es wird wieder die Spannungsquelle 35a mit niedriger Spannung angeschlossen. Die Schalter können dabei beliebige elektrische Bauteile sein, die insbesondere in der Lage sind, im Millisekunden-Bereich zu koppeln und entkoppeln.

Dadurch erreicht der Strom in der elektrischen Spule 26 schneller den gewünschten Wert. In einem konkreten Fall wird die gewünschte Stromstärke innerhalb von 10ms anstatt von 40ms erreicht. Der Wechsel zwischen den Spannungen kann über eine elektrische Schaltung erfolgen.

Eine Kombination aus Spannung und Strom ist auch möglich. Spannungen von über 24 Volt und weit darüber (z.B. > hundert Volt) sind auch möglich.

### Bezugszeichenliste:

| | | | |
|---|---|---|---|
| 1 | Magnetorheologische Bremseinrichtung | 26c | Spulenebene |
| | | 26d | radiale Richtung zu 26c |
| 1a | Bremsgehäuse | 26e | axiale Breite |
| 2 | Bremskomponente | 27 | Steuereinrichtung |
| 3 | Bremskomponente | 28 | Vergussmasse |
| 4 | Halter | 29 | Schnappscheibe |
| 5 | Spalt, Kanal | 29a | Führung |
| 6 | Medium | 29b | Volumen |
| 8 | Feld | 30 | Lager |
| 10 | spitzwinkliger Bereich | 31 | Membran |
| 11 | Wälzkörper | 32 | Quernut |
| 11a | Wälzkörperabschnitt | 33 | (zylindrischer) |
| 11b | Spalthöhe von 5b | | Grundkörper |
| 11c | radialer Freiraum bei 5b | 35 | Kabeldurchführung |
| 11d | Durchmesser von 11 | 36 | Aufnahme |
| 11f | Halterung | 36a | Außendurchmesser |
| 12 | Achse | 37 | zylindrische Lauffläche |
| 13 | Mantelteil | 37a | Außendurchmesser |
| 13a | Durchmesser | 38 | Dichtung |
| 13b | Durchmesser13c Höhe | 39 | O-Ring |
| 13d | Wandstärke | 40 | Sternkontur |
| 13e | Hülsenteil | 40a | Ringflansch |
| 14 | Abschluss | 40b | Mutter |
| 15 | Abschluss, Deckel | 40c | Spalthöhe |
| 16 | Stift | 40d | Spaltbereich |
| 18 | Leuchtmittel | 40e | minimale Spalthöhe |
| 19 | magnetische Partikel | 40f | Sternblech |
| 20 | axiale Richtung | 41 | Scheibenkontur |
| 21 | Kern | 41a | Spaltabschnitt |
| 21b | minimaler Durchmesser | 41b | Spalthöhe |
| 22 | Hub | 42 | Scheibenkörper |
| 23 | Drehknopf | 43 | Benutzerschnittstelle |
| 24 | Außenring | 44 | Stapelpaket |
| 25 | radiale Richtung | 45 | Kabel |
| 26 | Spule | 46 | Scheibenblech |
| 26a | maximaler Durchmesser | 47 | abstehende Außenkontur |
| 26b | Spulenhalter | 48 | Befüllschraube |
| 49 | Überzug | 102 | Daumenwalze |
| 50 | Konsole | 103 | Computermaus |
| 61 | Winkelsegment | 104 | Joystick |
| 62 | Winkelsegment | 105 | Gamepad |
| 67 | Innenoberfläche von 13 | 106 | Mausrad |
| 68 | Signal | 110 | geschlossene Kammer |
| 69 | Amplitude | 111 | erstes Ende von 110 |
| 70 | Sensoreinrichtung | 112 | erste Lagerstelle |
| 71 | Magnetringeinheit | 113 | Magnetfelderzeugungseinrichtung |
| 72 | Magnetfeldsensor | | |
| 73 | Sensorleitung | 114 | Volumen von 110 |
| 74 | Taster | 115 | zweites Ende der geschlossenen Kammer |
| 75 | Abschirmeinrichtung | | |
| 76 | Abschirmkörper | 116 | Durchmesser erste Lagerstelle |
| 77 | Trenneinheit | | |
| 78 | Entkopplungseinrichtung | 117 | Durchmesser zweite Lagerstelle |
| 79 | Sensorplatine | | |
| 79a | Kontaktpin | 118 | zweite Lagerstelle |
| 80 | Magnetfeldkonzentrator | 119 | Achsstummel |
| 81 | Magnetfeldkonzentrator | 120 | Ausgleichskanal |
| 82 | distales Ende | 121 | Endabschnitt von 2 |
| 83 | Arm | 122 | radiale Richtung (global) |
| 84 | radiale Länge des Arms | 200 | Gerätekomponente |
| 85 | Spalthöhe | 226 | Rasterpunkt |
| 86 | Außenoberfläche | 228 | Endanschlag |
| 87 | Spaltmaß | 229 | Endanschlag |
| 87a | Vertiefung | 237 | Winkelabstand |
| 100 | Haptische Bedieneinrichtung | 238 | Anschlagmoment |
| | | 239 | Rastermoment |
| 101 | Bedienkopf | 240 | Grundmoment |

## Patentansprüche

1. Magnetorheologische Bremseinrichtung (1) mit einem Bremsgehäuse (1a) und einem feststehenden Halter (4) und mit wenigstens zwei Bremskomponenten (2, 3), wobei eine der beiden Bremskomponenten (2, 3) mit dem Halter (4) drehfest verbunden ist und wobei die beiden Bremskomponenten (2, 3) relativ zueinander kontinuierlich drehbar sind, wobei sich eine erste Bremskomponente (2) in axialer Richtung (20) erstreckt und einen sich in der axialen Richtung (20) erstreckenden Kern (21) aus einem magnetisch leitfähigen Material umfasst und wobei die zweite Bremskomponente (3) ein sich um die erste Bremskomponente (2) herum erstreckendes hohl ausgebildetes Mantelteil (13) umfasst, wobei zwischen der ersten und der zweiten Bremskomponente (2, 3) ein umlaufender und wenigstens zum Teil mit einem magnetorheologischen Medium (6) gefüllter Spalt (5) ausgebildet ist, **dadurch gekennzeichnet,**
**dass** in dem Bremsgehäuse (1a) wenigstens eine elektrische Spule (26) aufgenommen ist, wobei zwischen dem Mantelteil (13) und dem Kern (21) wenigstens eine Sternkontur (40) mit daran ausgebildeten Magnetfeldkonzentratoren (80, 81) angeordnet ist, welche in den Spalt (5) hineinragen, sodass sich in dem Bereich der Sternkontur (40) ein umlaufender Spaltbereich (40d) mit veränderlicher Spalthöhe (40c) ergibt, und dass die Sternkontur (40) wenigstens ein Stapelpaket (44) von Sternblechen (40f) umfasst.

2. Magnetorheologische Bremseinrichtung (1) nach Anspruch 1, wobei zwischen dem Mantelteil (13) und dem Kern (21) wenigstens eine Scheibenkontur (41) ausgebildet ist, wobei zwischen der Scheibenkontur (41) und dem Mantelteil (13) ein Spaltabschnitt (41a) ausgebildet ist, und wobei eine Spalthöhe (41b) in dem Spaltabschnitt (41a) weniger veränderlich ist als die Spalthöhe (40c) in dem Spaltbereich (40d) der Sternkontur (40).

3. Magnetorheologische Bremseinrichtung (1) nach dem vorhergehenden Anspruch, wobei der Spaltabschnitt (41a) eine über den Umfang im Wesentlichen konstante Spalthöhe (41b) aufweist und wobei die Scheibenkontur (41) eine zylindrische Außenkontur aufweist.

4. Magnetorheologische Bremseinrichtung (1) nach einem der drei vorhergehenden Ansprüche, wobei die Scheibenkontur (41) an wenigstens einer Axialseite eine nach außen abstehende Außenkontur (47) aufweist.

5. Magnetorheologische Bremseinrichtung (1) nach einem der drei
vorhergehenden Ansprüche, wobei der Spaltabschnitt (41a) eine kleinere Spalthöhe (41b) aufweist als eine minimale Spalthöhe (40e) des Spaltbereichs (40d).

6. Magnetorheologische Bremseinrichtung (1) nach einem der vorhergehenden Ansprüche, wobei wenigstens ein Stapelpaket (44) direkt aneinander anliegende Sternbleche (40f) umfasst.

7. Magnetorheologische Bremseinrichtung (1) nach einem der vorhergehenden Ansprüche, wobei ein Stapelpaket (44) Sternbleche (40f) und Scheibenbleche (46) umfasst.

8. Magnetorheologische Bremseinrichtung (1) nach einem der vorhergehenden Ansprüche, wobei das Stapelpaket (44) eine Mehrzahl von Stanzteilen umfasst oder aus Stanzteilen besteht.

9. Magnetorheologische Bremseinrichtung (1) nach einem der vorhergehenden Ansprüche, wobei wenigstens ein Magnetfeldkonzentrator (80, 81) eine sich zum distalen Ende hin verjüngende Querschnittsfläche aufweist oder am distalen Ende (82) abgerundet ausgebildet ist.

10. Magnetorheologische Bremseinrichtung (1) nach einem der vorhergehenden Ansprüche, wobei der Kern (21) eine Mehrzahl an Armen (83) und/oder das Mantelteil (13) eine Mehrzahl an Armen (83) als Magnetfeldkonzentratoren (80, 81) umfasst, die radial abstehen.

11. Magnetorheologische Bremseinrichtung (1) nach einem der vorhergehenden Ansprüche, wobei wenigstens eine elektrische Spule (26) um die Achse (12) herum gewickelt ist und im Wesentlichen ein Magnetfeld in axialer Richtung (20) erzeugt oder wobei wenigstens eine elektrische Spule (26) in axialer Richtung (20) um den Kern (21) gewickelt ist und im Wesentlichen ein Magnetfeld (8) in radialer Richtung (26d) erzeugt.

12. Magnetorheologische Bremseinrichtung (1) nach dem vorhergehenden Anspruch, wobei die elektrische Spule (26) radial zwischen dem Kern (21) und dem Mantelteil (13) aufgenommen ist und wobei die elektrische Spule (26) innen an dem Mantelteil (13) befestigt oder um den Kern (21) gewickelt ist.

13. Magnetorheologische Bremseinrichtung (1) nach einem der vorhergehenden Ansprüche, wobei wenigstens zwei Sternkonturen (40) axial voneinander beabstandet in dem Bremsgehäuse (1a) aufgenommen sind und wobei insbesondere wenigstens zwei Sternkonturen (40) eine unterschiedliche Außenkontur aufweisen.

14. Magnetorheologische Bremseinrichtung (1) nach einem der vorhergehenden Ansprüche, wobei zwischen den Bremskomponenten (2, 3) eine geschlossene Kammer (110) ausgebildet ist, und wobei die zweite Bremskomponente (3) an einem ersten Ende (111) der geschlossenen Kammer (110) an der ersten Bremskomponente (2) drehbar aufgenommen ist, wobei die geschlossene Kammer (110) im Wesentlichen mit dem magnetorheologischen Medium (6) gefüllt ist.

15. Gerätekomponente (200) mit einer magnetorheologischen Bremseinrichtung (1) nach einem der vorhergehenden Ansprüche.

## Claims

1. A magnetorheological braking device (1) with a brake housing (1a) and a fixed holder (4) and with at least two brake components (2, 3), wherein one of the two brake components (2, 3) is connected torque-proof to the holder (4) and wherein the two brake components (2, 3) are continuously rotatable relative to one another, wherein a first brake component (2) extends in the axial direction (20) and a core (21) extending in the axial direction (20) comprises a magnetically conductive material and wherein the second brake component (3) comprises a hollow casing part (13) extending around the first brake component (2), wherein an circumferential gap (5) filled at least partially with a magnetorheological medium (6) is formed between the first and the second brake component (2, 3), **characterised in that** at least one electrical coil (26) is accommodated in the brake housing (1a), wherein at least one star contour (40) with magnetic field concentrators (80, 81) formed thereon, which project into the gap (5), is arranged between the casing part (13) and the core (21), so that a circumferential gap region (40d) with variable gap height (40c) results in the region of the star contour (40), and that the star contour (40) comprises at least one stack package (44) of star plates (40f).

2. The magnetorheological braking device (1) according to claim 1, wherein at least one disc contour (41) is formed between the casing part (13) and the core (21), wherein a gap section (41a) is formed between the disc contour (41) and the casing part (13), and wherein a gap height (41b) in the gap section (41a) is less variable than the gap height (40c) in the gap region (40d) of the star contour (40).

3. The magnetorheological braking device (1) according to the preceding claim, wherein the gap section (41a) has an essentially constant gap height (41b) over the circumference and wherein the disc contour (41) has a cylindrical outer contour.

4. The magnetorheological braking device (1) according to any one of the three preceding claims, wherein the disc contour (41) has an outwardly projecting outer contour (47) on at least one axial side.

5. The magnetorheological braking device (1) according to any one of the three preceding claims, wherein the gap section (41a) has a smaller gap height (41b) than a minimum gap height (40e) of the gap region (40d).

6. The magnetorheological braking device (1) according to any one of the preceding claims, wherein at least one stacking package (44) comprises star plates (40f) directly adjacent to one another.

7. The magnetorheological braking device (1) according to any one of the preceding claims, wherein a stacking package (44) comprises star plates (40f) and disc plates (46).

8. The magnetorheological braking device (1) according to any one of the preceding claims, wherein the stacking package (44) comprises a plurality of stamped parts or consists of stamped parts.

9. The magnetorheological braking device (1) according to any one of the preceding claims, wherein at least one magnetic field concentrator (80, 81) has a cross-sectional area tapering towards the distal end or is formed rounded off at the distal end (82).

10. The magnetorheological braking device (1) according to any one of the preceding claims, wherein the core (21) comprises a plurality of arms (83) and/or the casing part (13) comprises a plurality of arms (83) as magnetic field concentrators (80, 81), which project radially.

11. The magnetorheological braking device (1) according to any one of the preceding claims, wherein at least one electrical coil (26) is wound around the axis (12) and essentially produces a magnetic field in the axial direction (20) or wherein at least one electrical coil (26) is wound around the core (21) in the axial direction (20) and essentially produces a magnetic field (8) in the radial direction (26d).

12. The magnetorheological braking device (1) according to the preceding claim, wherein the electrical coil (26) is accommodated radially between the core (21) and the casing part (13) and wherein the electrical coil (26) is internally fastened to the casing part (13) or wound around the core (21).

13. The magnetorheological braking device (1) according to any one of the preceding claims, wherein at least two star contours (40) are accommodated in the brake housing (1a) axially spaced apart from one another and wherein, in particular, at least two star contours (40) have a different outer contour.

14. The magnetorheological braking device (1) according to any one of the preceding claims, wherein a closed chamber (110) is formed between the brake components (2, 3), and wherein the second brake component (3) is held rotatable on the first brake component (2) at a first end (111) of the closed chamber (110), wherein the closed chamber (110) is substantially filled with the magnetorheological medium (6).

15. A device component (200) with a magnetorheological braking device (1) according to any one of the preceding claims.

## Revendications

1. Système de freinage (1) magnétorhéologique, pourvu d'un carter de frein (1a) et d'un support de montage (4) stationnaire et pourvu d'au moins deux composants de freinage (2, 3), l'un des deux composants de freinage (2, 3) étant assemblé de manière solidaire en rotation avec le support de montage (4) et les deux composants de freinage (2, 3) étant rotatifs en continu l'un par rapport à l'autre, un premier composant de freinage (2) s'étendant dans la direction (20) axiale et comprenant un noyau (21) qui s'étend dans la direction (20) axiale en une matière magnétiquement conductrice et le deuxième composant de freinage (3) comprenant une partie enveloppante (13), conçue de forme creuse, s'étendant autour du premier composant de freinage (2), entre le premier et le deuxième composants de freinage (2, 3) étant conçue une fente (5) périphérique et remplie au moins en partie d'un agent (6) magnétorhéologique, **caractérisé**
**en ce que** dans le carter de frein (1a) est réceptionnée au moins une bobine (26) électrique, entre la partie enveloppante (13) et le noyau (21) étant placé au moins un contour (40) en forme de pignon doté de concentrateurs (80, 81) de champs magnétiques conçus sur celui-ci, lesquels saillissent à l'intérieur de la fente (5), de sorte que dans la zone du contour (40) en forme de pignon, il résulte une zone de fente (40d) périphérique avec une hauteur de fente (40c) variable et **en ce que** le contour (40) en forme de pignon comprend au moins un paquet empilé (44) de plaques (40f) en forme de pignon.

2. Système de freinage (1) magnétorhéologique selon la revendication 1, entre la partie enveloppante (13) et le noyau (21) étant conçu au moins un contour (41) en forme de disque, entre le contour (41) en forme de disque et la partie enveloppante (13) étant conçu un segment de fente (41a) et une hauteur de fente (41b) dans le segment de fente (41a) étant moins variable que la hauteur de fente (40c) dans la zone de fente (40d) du contour (40) en forme de pignon.

3. Système de freinage (1) magnétorhéologique selon la revendication précédente, le segment de fente (41a) présentant une hauteur de fente (41b) essentiellement constante sur le pourtour et le contour (41) en forme de disque présentant un contour extérieur cylindrique.

4. Système de freinage (1) magnétorhéologique selon l'une quelconque des trois revendications précédentes, le contour (41) en forme de disque présentant sur au moins un côté axial un contour extérieur (47) saillant vers l'extérieur.

5. Système de freinage (1) magnétorhéologique selon l'une quelconque des trois revendications précédentes, le segment de fente (41a) présentant une hauteur de fente (41b) inférieure à une hauteur de fente (40e) minimale de la zone de fente (40d).

6. Système de freinage (1) magnétorhéologique selon l'une quelconque des revendications précédentes, au moins un paquet empilé (44) comprenant des plaques (40f) en forme de pignon directement adjacentes.

7. Système de freinage (1) magnétorhéologique selon l'une quelconque des revendications précédentes, un paquet empilé (44) comprenant des plaques (40f) en forme de pignon et des plaques (46) en forme de disque.

8. Système de freinage (1) magnétorhéologique selon l'une quelconque des revendications précédentes, le paquet empilé (44) comprenant une pluralité de pièces d'estampage ou étant constitué de pièces d'estampage.

9. Système de freinage (1) magnétorhéologique selon l'une quelconque des revendications précédentes, au moins un concentrateur (80, 81) de champs magnétiques comportant une surface de section transversale s'effilant en direction de l'extrémité distale ou étant conçu de forme arrondie sur l'extrémité distale (82).

10. Système de freinage (1) magnétorhéologique selon l'une quelconque des revendications précédentes, le noyau (21) comprenant une pluralité de bras (83) et / ou la partie enveloppante (13) comprenant une pluralité de bras (83) en tant que concentrateurs (80, 81) de champs magnétiques, qui saillissent radialement.

11. Système de freinage (1) magnétorhéologique selon l'une quelconque des revendications précédentes, au moins une bobine (26) électrique étant enroulée autour de l'axe (12) et générant essentiellement un champ magnétique en direction (20) axiale ou au moins une bobine (26) électrique étant enroulée en direction (20) axiale autour du noyau (21) et générant essentiellement un champ magnétique (8) en direction (26d) radiale.

12. Système de freinage (1) magnétorhéologique selon la revendication précédente, la bobine (26) électrique étant réceptionnée radialement entre le noyau (21) et la partie enveloppante (13) et la bobine (26) électrique étant fixée à l'intérieur sur la partie enveloppante (13) ou étant enroulée autour du noyau (21).

13. Système de freinage (1) magnétorhéologique selon l'une quelconque des revendications précédentes, au moins deux contours (40) en forme de pignon étant logés en étant axialement écartés l'un de l'autre dans le carter de frein (1a) et notamment au moins deux contours (40) en forme de pignon présentant un contour extérieur différent.

14. Système de freinage (1) magnétorhéologique selon l'une quelconque des revendications précédentes, entre les composants de freinage (2, 3) étant conçu un compartiment (110) clos et le deuxième composant de freinage (3) étant réceptionné de manière rotative sur une première extrémité (111) du compartiment (110) clos sur le premier composant de freinage (2), le compartiment (110) clos étant essentiellement rempli avec l'agent (6) magnétorhéologique.

15. Composant (200) d'un appareil, pourvu d'un système de freinage (1) magnétorhéologique selon l'une quelconque des revendications précédentes.
